# EUROPEAN PATENT APPLICATION

(11) **EP 4 328 186 A1**
(43) Date of publication of application: **28.02.2024**
(21) Application number: 22791104.7
(22) Date of filing: 21.04.2022
(51) Int. Cl.: C01G 23/00, C01G 23/08, B82Y 30/00, B82Y 40/00

(54) **PREPARATION METHOD FOR NANO TITANATE, NANO TITANIC ACID, AND NANO TIO2, AND A USE THEREOF**

(30) Priority: 23.04.2021 CN 202110442575
(71) Applicant: Li, Yanjun, Suzhou, Jiangsu 215500 (CN); Zhao, Yuanyun, Guangdong 523000 (CN)
(72) Inventor: ZHAO, Yuanyun, Dongguan, Guangdong 523000 (CN); LI, Yanjun, Suzhou, Jiangsu 215500 (CN)
(74) Representative: Vitina, Maruta
(86) International application number: PCT/CN2022/088185
(87) International publication number: WO 2022/222998

(57) **Abstract**

A preparation method for nano titanate, nano titanic acid, and nano TiO₂. A Ti-T intermetallic compound, as a titanium source, is reacted with an alkaline solution under ambient pressure at a temperature near the boiling point of the alkaline solution, enabling the efficient preparation of titanate nanofilm materials under normal pressure. On this basis, it is possible to economically produce titanic acid nanofilm materials and TiO₂ nanosheet/powder. In combination with subsequent high-temperature and high-pressure reaction, titanate nanotubes, titanic acid nanotubes, and TiO₂ nanotubes/rods can be efficiently prepared. The preparation method provided herein has simple operation and low cost, and can prepare various nano titanate, nano titanic acid and nano titanium dioxide materials, including nanofilms and nanotubes/rods, exhibiting good application prospects in the fields of polymer-based nanocomposite materials, ceramic materials, photocatalytic materials, hydrolysis-based hydrogen production, hydrophobic materials, sewage degradation materials, bactericidal coatings, anti-corrosion paints, and marine paints.

## Description

### TECHNICAL FIELD

The present invention relates to the technical field of nanomaterials, and in particular to a method of preparing nano titanate, nano titanic acid, and nano-TiO₂, and an application thereof.

### BACKGROUND

At present, the main method for the preparation of titanate nanomaterials, and its subsequent products of titanic acid nanomaterials and TiO₂ nanomaterials is the strong alkaline hydrothermal method. However, this reaction requires the use of a high-pressure reaction vessel. Generally, titanate (e.g., sodium titanate) nano-tubes is firstly obtained by a long period of hydrothermal synthesis under high-temperature and high-pressure conditions by using commercial nano TiO₂ and a high concentration of strong alkalis (e.g., NaOH solution) as raw materials, then titanic acid nanotubes is obtained by a neutralization and acid washing process, and then TiO₂ nanotubes is obtain by a furthermore heat treatment. For example, in 2001, it was reported that titanic acid nanotubes with a tube length of tens to hundreds of nanometers and an inner diameter of 5.3 nm could be obtained by hydrothermal reaction of anatase-type TiO₂ and a 10 mol/L sodium hydroxide solution in a high-pressure vessel at 130°C for 72 h, followed by water washing of the product to neutrality. Other methods reported in the literature for the preparation of sodium titanate nanoparticles also include: weighing NaOH, TiO₂ according to a stoichiometric relationship and then transferring them into a polytetrafluoroethylene high-pressure reactor, mixing them and holding them at a temperature of 230°C for 48h to 96h, and then removing them when they are cooled down to room temperature, washing and drying them to obtain sodium titanate nanomaterials, and further acid washing them to obtain titanic acid nanomaterials. It can be seen that the traditional hydrothermal method with strong alkali is characterized by 1) using TiO₂ as the titanium source; 2) being carried out in a high-pressure reaction vessel, which requires airtight and high-pressure conditions; 3) being carried out at higher temperatures; 4) requiring a very long reaction time in terms of hours or tens of hours; and 5) the products obtained are generally nano-tubular titanates or nano-tubular titanic acid. These features, especially the use of TiO₂ as the titanium source, which requires a high-pressure confined environment with an extremely long reaction time, seriously increase the production cost and reduce the production efficiency, which in turn hinders the large-scale and widespread application of titanate nanomaterials, titanic acid nanomaterials, and TiO₂ nanomaterials.

### SUMMARY

Based on this, it is necessary to provide, in response to the above problem, a method and use for the preparation of nano titanate, nano titanic acid, and nano TiO₂ with a simple process, under mild conditions, and suitable for large-scale production.

The invention contains ten aspects in order, specifically:
In the first aspect, a method of preparing a titanate nanofilm material, comprising the following steps:
step 1, providing an initial alloy comprising a T element and a Ti element, wherein the T element comprises at least one of Al, Zn, and the phase composition of the initial alloy comprises a T-Ti intermetallic compound;
step 2, reacting the initial alloy with an alkali solution at a temperature of *T₁*, during which the reaction interface advances inwardly from the surface of the initial alloy at an average rate of greater than 20 µm/min, and the initial alloy at the reaction interface undergoes nano-fragmentation through hydrogen generation and T-removal reaction, and simultaneously undergoes shape and compositional reconfiguration to generate solid flocculent products; where 100°C <*T₁*;
step 3, the temperature of the solid flocculated product in the reaction system described in step 2 is lowered from *T₁* and the solid flocculated product is collected, i.e., the titanate nanofilm material is obtained.

Furthermore, the thin film material, macroscopically viewed in the form of a powder material, is microscopically observed to consist of a large number of two-dimensional thin films.

Furthermore, the thin film material, macroscopically viewed as a powder material, microscopically observed to be composed of a large number of monolithic two-dimensional thin films dispersed or entangled, the structure of which is completely different from that of the nano-porous structure formed by the conventional dealloying reaction. The nanoporous structure obtained by the conventional dealloying reaction consists of a three-dimensional network of nigaments connected to form a whole, and its overall appearance is basically the same as that of the initial alloy before the dealloying reaction;

Furthermore, the two-dimensional thin-film material means a material in which the smallest unit of the material (e.g., a single powder particle, a monolithic film) has a large area and its dimension in the thickness direction is much smaller than the two-dimensional dimensions in the area direction, and its thickness does not exceed 10 nm.

In step 1.
Furthermore, the T element comprises Al; Furthermore, the T element is Al;
Furthermore, the T element comprises Zn; Furthermore, the T element is Zn;
Furthermore, the T element comprises Al with Zn;
Furthermore, the initial alloy is prepared by solidification of a melt containing a T element and Ti, and a solidification structure comprising a T-Ti intermetallic compound is formed during the solidification process of the alloy.
Furthermore, the T-Ti intermetallic compound is equivalent to the Ti-T intermetallic compound;
Furthermore, the solidification rate of the initial alloy melt is 1 K/s ~ 10⁷ K/s;
Furthermore, the phase composition of the initial alloy consists mainly of T-Ti intermetallic compounds;
Furthermore, the T-Ti intermetallic compound comprises at least one of T₃Ti, T₂Ti, TTi intermetallic compound;
Furthermore, the T-Ti intermetallic compound comprises at least one of Al₃Ti, Al₂Ti, AlTi intermetallic compound;
Furthermore, the initial alloy comprises at least one of T₃Ti, T₂Ti, TTi intermetallic compounds;
Furthermore, the initial alloy comprises at least one of Al₃Ti, Al₂Ti, AlTi intermetallic compounds;
Furthermore, the initial alloy comprises mainly one of Al₃Ti, Al₂Ti, AlTi intermetallic compounds;
As one of the preferences, the initial alloy comprises an Al₃Ti intermetallic compound;
As a further preference, the initial alloy comprises mainly Al₃Ti intermetallic compounds;
As a preference two, the initial alloy comprises an Al₂Ti intermetallic compound;
As a further preference, the initial alloy comprises mainly Al₂Ti intermetallic compounds;
As a preference three, the initial alloy comprises AlTi intermetallic compounds;
As a further preference, the initial alloy comprises mainly TTi intermetallic compounds;
As a further preference, the initial alloy comprises mainly AlTi intermetallic compounds;
As a preference, the atomic percentage content of T in the initial alloy is less than or equal to 75%;
As a preference, the atomic percentage content of T in the initial alloy is less than 70%;
As a preference, the atomic percentage content of Al in the initial alloy is less than or equal to 75%;
As a preference, the atomic percentage content of Al in the initial alloy is less than 70%;
As a preference, the initial alloy does not contain a T phase;
As a preference, the initial alloy does not contain an Al phase;
According to the Al-Ti phase diagram, when the atomic percent content of Al in the Al-Ti alloy is more than 75%, the alloy solidification tissue generally contains the Al phase; when the atomic percent content of Al in the Al-Ti alloy is less than 75%, the alloy solidification tissue generally does not contain the Al phase;
According to the phase diagram, when TiAl₂ is contained in the alloy, it can coexist with the TiAl phase or TiAl3 phase, but not with the Al phase, and thus the alloy containing TiAl₂ does not contain the Al phase;
Furthermore, the T-Ti intermetallic compound means that the phase composition of the intermetallic compound is a T-Ti intermetallic compound phase, i.e., the XRD analysis of the T-Ti intermetallic compound results in a T-Ti intermetallic compound comprising an Al₃Ti, Al₂Ti, AlTi, Zn₂Ti, Zn₂Ti, ZnTi intermetallic compound phase structure.
Furthermore, the average size of any one dimension in the three-dimensional direction of the initial alloy shape is greater than 4 µm;
Furthermore, the average size of any one dimension in the three-dimensional direction of the initial alloy shape is greater than 10 µm;
Furthermore, the average size of any one dimension in the three-dimensional direction of the initial alloy shape is greater than 15 µm;
Furthermore, the initial alloy is in the form of a powder or a strip, and the powder particles or strips have a scale of less than 5 mm in at least one dimension in the three-dimensional direction;
Furthermore, the initial alloy powder particles or strips have a scale of less than 1 mm in at least one dimension in a three-dimensional direction;
Furthermore, the initial alloy powder particles or strips have a scale of less than 500 µm in at least one dimension in the three-dimensional direction;
As a preference, the initial alloy powder particles or strips have a scale of less than 200 µm in at least one dimension in the three-dimensional direction;
As a preference, the initial alloy powder particles or strips have a scale of less than 50 µm in at least one dimension in the three-dimensional direction;
Furthermore, when the initial alloy is in the form of a strip, it can be prepared by a method comprising the melt spinning method;
Furthermore, when the initial alloy is in the form of a powder, a larger initial alloy ingot can be prepared by a casting method, and then crushed into the initial alloy powder.

In step 2.
Furthermore, the T refers to a T type element, a shorthand for a T type element, T represents any one of Al, Zn, AlZn, and there is no limit to the ratio of Al to Zn in AlZn;
Furthermore, the hydrogen generation and T-removal reaction is a reaction in which T is dissolved in a hot alkaline solution to from a salt, while hydrogen is released when the initial alloy is reacted with the hot alkaline solution at a temperature of *T₁*;
Furthermore, the alkaline solution comprises at least one of NaOH, KOH, LiOH, RbOH, Ba(OH)₂, Ca(OH)₂, Sr(OH)₂ solution;
Furthermore, the solvent in the alkaline solution comprises water; as a preference, the solvent in the alkaline solution is water;
Furthermore, the concentration of alkali in the alkaline solution is 5.1 ~ 25 mol/L;
As a preference, the concentration of alkali in the alkaline solution is 5.1 ~ 15 mol/L;
As a preference, the concentration of alkali in the alkaline solution is 7 ~ 15 mol/L; as a furthermore preference, the concentration of alkali in the alkaline solution is 7 ~ 12 mol/L;
As a further preference, the concentration of alkali in the alkaline solution is 10 ~ 15 mol/L;
Furthermore, the concentration of alkali refers to the concentration of OH⁻ in the alkaline solution;
Furthermore, the alkali in the alkaline solution reacting with the initial alloy is an overdose, and the volume of the alkaline solution is more than 5 times the volume of the initial alloy, so that the reaction can be proceed all the time at a higher alkaline concentration;
Furthermore, the volume of the alkaline solution is more than 10 times the volume of the initial alloy;
Furthermore, the volume of the alkaline solution is more than 20 times the volume of the initial alloy;
Furthermore, the temperature at which the initial alloy reacts with the alkaline solution is the temperature of the alkaline solution;
Furthermore, 100°C <*T₁*;
Furthermore, the reaction of the initial alloy with the alkaline solution is carried out at ambient pressure or high pressure;
Furthermore, the reaction of the initial alloy with the alkaline solution is carried out in a closed vessel;
Under a closed vessel, high pressure is defined when the pressure inside the vessel exceeds one atmosphere; also, additional high pressure can be formed if the gases generated by the reaction inside the vessel cannot be discharged.

Furthermore, when the reaction is carried out in the closed vessel, the initial alloy and the alkaline solution are first placed separately in the closed vessel, and when the temperature of the alkaline solution reaches a set reaction temperature, the initial alloy is then contacted with the alkaline solution and the reaction is carried out.
Furthermore, the temperature of the alkaline solution may exceed its boiling point temperature at ambient pressure within the airtight container;
Furthermore, the reaction of the initial alloy with the hot alkaline solution is carried out at ambient pressure;
Furthermore, the ambient pressure, is the atmospheric ambient air pressure without the use of a closed container; furthermore, if the container is not tightly closed, although the pressure inside the container is slightly higher than the ambient pressure in a completely open environment, the pressure at this time also falls into the category of ambient pressure as it is also a non-closed environment.

Furthermore, the reaction is carried out in an atmospheric pressure environment, and atmospheric pressure generally refers to 1 standard atmospheric pressure, wherein the boiling point of the corresponding water is 100°C.; when there is an alkali dissolved in the water, the boiling temperature of the aqueous solution of the alkali is higher than 100°C. under 1 standard atmospheric pressure, and the higher the concentration of the alkali is, the higher the boiling point is. For example, the boiling point of *T_{f solution}* for the 5.1 mol/L sodium hydroxide aqueous solution is about 108°C; the boiling point of *T_{f solution}* for the 7 mol/L sodium hydroxide aqueous solution is about 112°C; the boiling point of *T_{f solution}* for the 10 mol/L sodium hydroxide aqueous solution is about 119°C; the boiling point of *T_{f solution}* for the 12 mol/L sodium hydroxide aqueous solution is about 128°C; the boiling point of *T_{f solution}* for the 15 mol/L sodium hydroxide aqueous solution is about 140°C; the boiling point of *T_{f solution}* for the 17 mol/L sodium hydroxide aqueous solution is about 148°C; the boiling point of *T_{f solution}* for the 20 mol/L sodium hydroxide aqueous solution is about 160 °C; the boiling point of *T_{f solution}* for the 25 mol/L sodium hydroxide aqueous solution is about 180°C; The boiling point of *T_{f solution}* for the 10 mol/L potassium hydroxide aqueous solution is about 125°C; the boiling point of *T_{f solution}* for the 12 mol/L potassium hydroxide aqueous solution is about 136°C; the boiling point of *T_{f solution}* for the 15 mol/L potassium hydroxide aqueous solution is about 150°C;
Furthermore, 100°C <*T₁* ≤ *T_{f solution}*; wherein the *T_{f solution}* is the boiling point temperature of the solution of the alkali involved in the reaction at ambient pressure;
Furthermore, 101°C ≤ *T₁* ≤ *T_{f solution}*;
Furthermore, 101°C ≤ *T₁* ≤ *T_{f solution}*;
Furthermore, 105°C ≤ *T₁* ≤ *T_{f solution}*;
Furthermore, 101°C ≤ *T_{f solution}* -5°C ≤ *T₁* ≤ *T_{f solution}*;
Furthermore, 101°C ≤ *T_{f solution}* -2°C ≤ *T₁* ≤ *T_{f solution}*;
As a further preference, the temperature of the alkaline solution is *T_{f solution}*, i.e. *T₁* = *T_{f solution}*;
Since the highest temperature to which the reaction solution can be heated at ambient pressure is its boiling point temperature (*T_{f solution}*), when the temperature reaches this temperature and continues to be heated, the temperature of the solution does not increase. Therefore, the boiling point temperature is the easiest, simplest, and most accurate to control. Moreover, the reaction time required for the boiling point temperature reaction is also shorter than that required for other temperatures below the boiling point, and the product yield and efficiency are also the highest;

Since the T elements (Al, Zn) are amphoteric metals, they can react with hot concentrated alkaline solution to become T salts and dissolve in the solution with hydrogen generation reaction vigorously; therefore, the T element in the initial alloy can be removed through the reaction between T and alkaline solution, and the remaining Ti in the initial alloy furthermore interacts with the alkaline solution and undergoes a series of simultaneous changes, including diffusive rearrangement of Ti atoms as well as their interaction with hydroxide, oxygen, cations in the alkali, and generates new two-dimensional film-like solid flocculent products through shape and compositional reconfiguration.

Furthermore, the initial alloy is reacted with the alkaline solution at a temperature higher than 100°C, which is important for the preparation of the product whose microscopic morphology is a two-dimensional thin film-like product. In one comparative example, when the initial TiAl₃ intermetallic alloy powder is reacted with a NaOH solution of 10 mol/L and at 35°C for 2 h at ambient pressure, the shape of the original initial alloy powder before and after the reaction is substantially unchanged, and it remains as the original crushed and angular powdery particles. It also does not generate a large number of monolithic two-dimensional film-like products in the microstructure, but generates nanoporous structure of titanate or titanium through the three-dimensional network connection, which maintains the similar microstructure to the original alloy powder, including the angular shape; the size of their particle size is comparable to the size of the initial alloy powder, mainly in several microns or tens of microns level. Thus, the reaction of the initial alloy with the alkaline solution occurring at a lower temperature or near room temperature is completely different from the reaction of the present invention occurring at 100°C <*T₁* ≤ *T_{f solution}*, and the morphology is also completely different.

Specifically, a concentrated hot alkaline solution is used to react with the initial alloy. When the temperature of the reaction solution is 100°C <*T₁* ≤ *T_{f solution}*, the appearance of the products obtained after the reaction changes completely compared to the appearance of the initial alloy, and the products formed in the solution are solid flocculants instead of the original solid powder or stripes that can be seen with the naked eye; in general, when the reaction temperature is higher than 100°C , a higher yield of the two-dimensional nano titanate film can be obtained, and the yield is generally 95% ~ 100%; when the reaction temperature is the boiling point of the alkaline solution *T_{f solution}* at ambient pressure, an even higher yield of the two-dimensional titanate nanofilm can be obtained, and the yield is generally 99% ~ 100%;
In particular, when the reaction occurs at ambient pressure and at the boiling point temperature *T_{f solution}* of the alkaline solution, the solution composition of the reaction system has an obvious special change, which is manifested in the following: in the temperature interval below the boiling point temperature of the alkaline solution, the solvent mainly exists as liquid water; however, near or at the boiling point temperature, the solvent contains water that is undergoing a transformation from liquid to gas, in addition to the liquid water and the gaseous water produced by boiling. Moreover, in this particular environment, the content and state of the dissolved atmospheric gases (oxygen, nitrogen) dissolved in the water are also extremely specific (because the large number of boiling steam, hydrogen generated by the reaction of T and alkalis, changes the conditions of saturation partial pressure of the gases dissolved in water, etc.). At the same time, the reaction of Ti-T intermetallic compounds with the concentrated alkaline solutions generates a large amount of hydrogen in the process of T-removal from the alloy, and the violent expansion effect caused by the hydrogen generated within a short period of time will cause great damage to the initial alloy that is continuing to react and cause continued fragmentation of the initial alloy at the reaction interface, and the T salts dissolved in alkaline solutions also change the composition of the reacting solution system. All of these characteristics of solutions at boiling point temperatures provide a very specific reaction environment for the reaction. Under this special reaction environment condition, a special reaction process will occur, which will cause the initial alloy to undergo nano-fragmentation through the intense hydrogen generation and T-removal reaction, making it difficult to stabilize the three-dimensional network-like continuous nanoporous structure generally generated by the dealloying reaction at low temperatures or room temperature, and instead, producing the flocculent solid product mainly composed of two-dimensional titanate nanofilms by reconstructing of shapes and compositions, which can greatly shorten the preparation time of the target product, while obtaining the high yield of 2D titanate nanofilms. Due to the constant boiling point temperature, the temperature control can be extremely precise, making the control of product morphology and composition extremely accurate and easy.

In particular, when the reaction occurs at ambient pressure and at the boiling point temperature *T_{f solution}* of the alkaline solution, the composition of the solution in the reaction system undergoes an obvious particular change, as shown below: in the temperature interval below the boiling point temperature of the alkaline solution, the solvent exists mainly as liquid water and the reaction system is in an ordinary state; however, near or at the boiling point temperature of the alkaline solution, the solvent also contains water in the critical state which is undergoing a transition from liquid water to gaseous water, in addition to the liquid water with the gaseous water produced by boiling. Moreover, due to the presence of the reactants in the solution and the previously generated nano-scale products, it provides a large number of plasmas for boiling and vaporization according to the principle of heterogeneous nucleation, thus making the reaction system in a specific environment of full boiling and vaporation. In this specific environment, the content and state of dissolved atmospheric gases (oxygen, nitrogen) in water are also extremely specific (because the large number of boiling water vapors, hydrogen generated by the reaction of T and alkali, changing the conditions of saturation partial pressure of dissolved gases in water). At the same time, the reaction of Ti-T intermetallic compounds with concentrated alkaline solution in the process of T-removal from the alloy, will generate a large amount of hydrogen, these hydrogen generated within a short period of time and a large number of heterogeneous nuclei boiling vapors produced by water vapor, which result in the violent expansion and further promote the nano-fragmentation reaction and reconfiguration process of the shape and the composition at the interface of the initial alloy; and the T salt in dissolved in alkaline solution will also change the composition of the reaction solution. These many characteristics of the solution at the boiling point temperature provide a very specific reaction environment for the reaction. Under this special reaction environment, a special reaction process will take place, so that the initial alloy will undergo efficient nano-fragmentation and shape and composition reconfiguration through the hydrogen generation reaction on T-salts, which makes it difficult to stabilize the three-dimensional network-like continuous nanoporous structure generated by the low- or room-temperature dealloying reaction, and instead, flocculated solid products consisting of predominantly titanate nanofilms are generated through a special nano-fragmentation process and a shape and composition reconfiguration process. This not only significantly reduces the preparation time of the target thin film-like product, but also achieve a high yield of titanate nanofilms. Moreover, the constant temperature of the boiling point of a specific alkali solution allows extremely precise temperature control, making the control of product morphology and composition extremely accurate and easy.

Furthermore, since the process of "nano-fragmentation - product shape and composition reconfiguration" described in step 2 occurs almost simultaneously with the reaction of "hydrogen evolution and T-removal process", the theoretical minimum time required for the product generation process described in step 2 is the time required for the initial alloy reaction interface to advance inward from the surface to complete the hydrogen evolution and T-removal reaction, which can be determined by the end of hydrogen evolution.

Furthermore, the hydrogen generation reaction is a vigorous hydrogen generation reaction;
Furthermore, the vigorous hydrogen generation and T-removal reaction means that the rate of advancement of the reaction interface of the hydrogen generation and T-removal reaction is sufficiently fast that the hydrogen evolved from the reaction interface is concentrated to be released in a very short period of time, thus behaving as a vigorous reaction process.

Furthermore, the degree of vigor of the hydrogen generation and T-removal reaction is related to the rate of reaction advancement of the reaction interface from the initial alloy surface inwardly per unit time, the higher the temperature of the alkaline solution, the faster the rate of advancement of the reaction interface is, and the more violent the reaction is.

Furthermore, the reaction interface advances inwardly from the initial alloy surface at an average rate of greater than 30 µm/min;
For example, when the alkali concentration is 10 mol/L, the reaction interface advances inwardly from the surface of the initial alloy during the reaction of the Ti₂₅Al₇₅ initial alloy with the alkaline solution as follows:
100°C *<T₁* ≤ 110°C, the average advancement rate of the reaction interface is about 35 µm/min ~ 60 µm/min;
110°C *<T₁* ≤ 120°C, the average advancement rate of the reaction interface is about 60 µm/min ~ 125 µm/min;
120°C *<T₁* ≤ *T_{f solution}*, the average advancement rate of the reaction interface is greater than 120 µm/min;
Furthermore, ultrasound is applied during the hydrogen generation and T-removal reaction to further enhance the nano-fragmentation effect and reaction rate by ultrasound treatment;
Furthermore, the frequency of the ultrasound is from 20 kHz ~ 10⁶ kHz;

Since T elements (Al, Zn) are amphoteric metals, their reaction with alkaline solutions near the boiling point temperature (which is higher than 100°C) at ambient pressure is very rapid. In general, the reaction time for the complete removal of T elements from the initial alloy is related to the shape of the initial alloy. The smaller the initial alloy powder particles or the thinner the initial alloy strips, the shorter the time required for completion of the hydrogen generation and T-removal reactions; conversely, the longer the time required for the completion of the hydrogen generation and T-removal reactions. According to the average advancement rate of the reaction interface and the size of the initial alloy, the minimum reaction time required for the completion of the hydrogen generation and T-removal reactions can be calculated as t. For example, when the initial alloy is a strip with a thickness of *d*, and the average advancement rate of the reaction interface is v, taking into account the fact that the reaction interface advances from the upper and lower surfaces of the strip, *t*=*0.5d*/*v*; similarly, when the initial alloy is a granular alloy with a diameter of *d* and the average advancement rate of the reaction interface is v, *t*=*Q.5d*/*v.*

In one example, a initial alloy strip comprised TiAl₃ intermetallic compound is reacted with a NaOH solution that is 10 mol/L and is at a boiling temperature (boiling temperature of about 119°C), and the average rate of advancement of the reactive interface of the initial alloy strip is about -120 µm/min, i.e., for a 40 µm-thick initial alloy strip, the hydrogen generation and Al-removal reactions can be completed in 10 s; for a 20 µm-thick initial alloy strip, the hydrogen generation and Al-removal reactions can be completed in 5 s. Even for a 5 mm particle size initial alloy ball, the hydrogen generation and Al-removal reactions can be completed in 21 min;
Furthermore, the reaction time between the initial alloy and alkaline solution at *T₁* temperature can be 10 s at the shortest;
Furthermore, the reaction time of the initial alloy with the hot alkaline solution at *T₁* temperature is 10 s - 59 min;
Furthermore, the reaction time of the initial alloy with the hot alkaline solution at *T₁* temperature is 10 s - 29 min;
Furthermore, the reaction time of the initial alloy with the hot alkaline solution at *T₁* temperature is 10 s - 9.9 min;
Furthermore, the reaction time of the initial alloy with the hot alkaline solution at *T₁* temperature is 10 s - 4.9 min;
Furthermore, the reaction time of the initial alloy with the hot alkaline solution at *T₁* temperature is 10 s - 2 min;
Furthermore, the reaction time of the initial alloy with the hot alkaline solution at *T₁* temperature is 10 s - 1 min;
Furthermore, the reaction time of the initial alloy with the hot alkaline solution at the *T₁* temperature is 10 s ~ 30 s;
Obviously, when *T₁* is higher and the initial alloy is thinner or the particle size is smaller, the shorter the reaction time required; conversely, the longer the reaction time;
When the hydrogen generation and T-removal reaction is completed, the reaction system subsequently reaches equilibrium; at this time, continue to extend the holding time of the reaction system at the original reaction temperature can still ensure the stability of the product. Thus, when the reaction time of the initial alloy with the hot alkaline solution exceeds the minimum required time t for hydrogen generation and T-removal reaction , e.g. up to several hours, the corresponding product can still be obtained;
Furthermore, the occurrence of nano-fragmentation means that the initial alloy at the reaction interface is fragmented into nanoscale intermediates or products by the hydrogen generation and T-removal reactions, and at the same time, two-dimensional nano titanate film products are generated by the shape and composition reconfiguration; in this process, the hydrogen released violently by the hydrogen generation and T-removal reactions promotes the nano-fragmentation of the intermediates and products, the shape and composition reconfiguration of the products, and the diffusion distribution of the products in the alkaline solution after leaving the reaction interface.

Furthermore, the occurrence of nano-fragmentation means that the initial alloy at the reaction interface is fragmented by the hydrogen generation and T-removal reactions into individual intermediates or products having a scale of less than 500 nm in at least one dimension in the three-dimensional direction;
Furthermore, the solid flocculated product, consisting primarily of individual intermediates or products having a scale of less than 20 nm in at least one dimension in the three-dimensional direction;
Furthermore, the solid flocculent product, consisting primarily of a single intermediate product or products having a scale of less than 10 nm in at least one dimension in a three-dimensional direction;
Furthermore, the solid flocculated product, after being generated by shape and composition reconfiguration, does not remain at the initial alloy reaction interface, but leaves the initial alloy reaction interface by diffusion during generation and is further diffused and distributed in the alkaline solution by thermal diffusion and convection of the alkaline solution liquid;
Furthermore, the shape and compositional reconfiguration means that the hydrogen generation and T-removal reactions of the initial alloy and the intermediate product after nano-fragmentation undergo further shape and compositional changes simultaneously, generating a nano-sized product with a completely different composition and shape from that of the initial alloy on the micrometer or millimeter scale;
Furthermore, the generated solid flocculated product or nano-flocculated titanate film does not contain a three-dimensional continuous network-like nanoporous structure or a porous skeletal structure;
Furthermore, the hydrogen generation and T-removal reactions transforms the micrometer or even millimeter-sized initial alloy into a large number of two-dimensional titanate nanofilms through a step-by-step nano-fragmentation process from the surface inwards;
Furthermore, the solid flocculent product mainly consists of a large number of two-dimensional titanate nanofilms combined by aggregation and entanglement with each other; which macroscopically appears as a solid flocculent product;
Furthermore, the flocculent solid-state product means that the nanoscale scale thin film-like product is in the form of a solid-state flocculant after agglomeration during diffusion, and can be suspended in solution for a longer period of time from an observational point of view.

In the step 3.

In general, after the temperature and products of a chemical reaction have reached equilibrium, if the temperature of the reaction system is slowly lowered, holding the reaction at the new temperature for a long time leads to a disruption of the original reaction equilibrium, with potential changes in the composition and morphologies of the reaction products.

The reaction system described in step 2 comprises the product generated by the reaction and the alkaline solution after the reaction;
In order to maintain the product of the initial reaction equilibrium in the hot alkaline solution while facilitating solid-liquid separation of the product, step 3 comprises a process of lowering the temperature of the solid flocculent product in the reaction system described in step 2 from *T₁* to a lower temperature interval. By controlling the rate of temperature reduction, the composition and morphology of the products formed at T1 temperature can be maintained by rapidly reducing the temperature of the reaction system so that the reaction products are too late to undergo corresponding changes.

Furthermore, the temperature of the solid flocculent product in the reaction system described in step 2 is reduced from *T₁* to a lower temperature interval at ambient pressure, wherein 100°C <*T₁* ≤ *T_{fsolution}*;
Furthermore, 101°C ≤ *T₁* ≤ *T_{fsolution}*;
Furthermore, 101°C ≤ *T₁* ≤ *T_{fsolution}*;
Furthermore, 105°C ≤ *T₁* ≤ *T_{fsolution}*;
Furthermore, 101°C ≤ *T_{fsolution}* -5°C ≤ *T₁* ≤ *T_{fsolution}*;
Furthermore, 101°C ≤ *T_{fsolution}* -2°C ≤ *T₁* ≤ *T_{fsolution}*;
As a further preference, *T₁* = *T_{fsolution}*;
Furthermore, reducing the temperature of the solid flocculent product in the reaction system described in step 2 from *T₁* to below 50°C;
Furthermore, reducing the temperature of the solid flocculent product in the reaction system described in step 2 from *T₁* to below 45°C;
Furthermore, reducing the temperature of the solid flocculent product in the reaction system described in step 2 from *T₁* to below 40°C;
Furthermore, lowering the temperature of the solid flocculent product in the reaction system described in step 2 at a cooling rate of greater than 5 K/s;
Lowering the temperature of the solid flocculated product in the reaction system described in step 2 at a cooling rate of greater than 10 K/s;
Lowering the temperature of the solid flocculent product in the reaction system described in step 2 at a cooling rate of greater than 20 K/s;
Lowering the temperature of the solid flocculent product in the reaction system described in step 2 at a cooling rate of greater than 50 K/s;
The time required to reduce the temperature of the solid flocculent product in the reaction system described in step 2 is less than 20 s;
The required time for lowering the temperature of the solid flocculent product in the reaction system described in step 2 is less than 10 s;
The time required for lowering the temperature of the solid flocculent product in the reaction system described in step 2 is less than 5 s;
The time required for lowering the temperature of the solid flocculent product in the reaction system described in step 2 is less than 2 s;
Furthermore, the way of lowering the temperature of the solid flocculent product in the reaction system described in step 2 includes at least one of the following: adding solvent to dilute, filtering and cooling;
At ambient pressure, since the reaction is carried out in an open vessel, the temperature of the solid flocculent product in the reaction system described in step 2 can be rapidly lowered by adding a cold solvent (e.g., water) to the reaction system and simultaneously lowering the concentration of the alkaline solution in the reaction system; the hot alkaline solution in the reaction system can also be rapidly lowered by rapidly pouring out the hot alkaline solution along with the solid flocculent product and simultaneously filtrating the flocculent product to separate it, thereby rapidly lowering the temperature of the solid flocculent product.

Furthermore, the additive solvent for dilution includes water;
Furthermore, the temperature of the additive solvent for dilution is room temperature;
Furthermore, the temperature of the additive solvent for dilution is 0°C ~ 35°C;
Furthermore, the temperature of the additive solvent for dilution is 0°C ~ 25°C;
Furthermore, the temperature of the additive solvent for dilution is 0°C ~ 20°C;
Furthermore, when the additive solvent for dilution is used, the temperature of the solid flocculent product in the reaction system described in step 2 is lowered at the same time as the temperature of the alkaline solution is simultaneously lowered, and in addition the concentration of the alkaline solution in the reaction system described in step 2 is lowered;
Furthermore, the concentration of the alkaline solution after dilution is less than 0.25 times of the original concentration; at the same time, the temperature of the alkaline solution after the reduction of temperature is less than 50°C;
As a preference, the concentration of the alkaline solution after dilution is 0.1 times or less of the original concentration; at the same time, the temperature of the alkaline solution after the reduction of temperature is lower than 45°C.

Furthermore, when filtration is taken to cool down the temperature, the specific steps are as follows: under ambient pressure, the alkaline solution containing the solid flocculent product at the temperature of *T₁* under ambient pressure is poured onto a cold filter, and the solid flocculent product and the alkaline solution are separated through the filter; the heat of the solid flocculent product is rapidly conducted away through the environment and the filter, and the temperature of the solid flocculent product can be rapidly reduced to a low temperature;
Furthermore, the temperature of the filter mesh is not higher than 30°C;
Furthermore, the temperature of the filter mesh is not higher than 20°C;
Furthermore, the temperature of the filter mesh is not higher than 10°C;
Furthermore, The plane of the filter mesh is at an angle to the horizontal so that when the hot alkaline solution containing solid flocculants is poured into the filter mesh, it can be sufficiently filtered and cooled as it flows and spreads over the filter;
Furthermore, the angle between the plane of the filter and the horizontal plane is 15° ~ 75°;
Furthermore, the mesh aperture size of the filter ranges from 5 µm ~ 1 mm;
Furthermore, the filter comprises a multi-layer filter mesh;
Furthermore, the filter comprises at least 4 layers;
Furthermore, the filter comprises a multi-layer filter mesh, and the mesh pore size of each layer is not inconsistent;
Solid flocculent products are generally aggregated and entangled together to form larger aggregation groups, so they can be separated at the primary level by the larger pore size filter mesh; through the multi-layer filtration and cooling mesh, it can be realized that the larger-sized of mesh filter can be used for the primary separation the solid flocculent products, the medium-sized mesh filter can be used to continue the separation of solid flocculent products, and the small-sized mesh filter can be used for the final separation of the solid flocculent products;
Furthermore, the filter mesh includes a metal filter with excellent thermal conductivity;
It can be understood that the temperature is lowered by cold filtration, not only is the temperature of the solid flocculent product rapidly reduced, but at the same time there is a separation of the solid-liquid substance according to the initial reaction equilibrium, which reduces the volume of the separated by-product solution as compared to the dilution method, and also ensures that the composition and morphology of the product generated by the *T₁* temperature are maintained, which is of positive feature.

Furthermore, as long as the temperature of the ultimately obtained titanate nanofilm material is lower than *T₁*, or its solid-liquid separation, cleaning, preservation, and use are carried out at a temperature lower than *T₁*, regardless of the historical change of the temperature of the nano titanate thin film material in the intermediate process, it belongs to the operation of lowering the temperature of the solid flocculated product in the reaction system of step 2 from *T₁* as described in step 3;
Furthermore, the process of collecting the solid flocculated product includes solid-liquid separation, washing, and drying of the solid flocculated product;
Furthermore, collecting the solid flocculated product, i.e., obtaining a two-dimensional titanate nanofilm material;
Furthermore, collecting the solid flocculated product, i.e., obtaining a two-dimensional titanate nanofilm powder material.

Furthermore, the thin film material, macroscopically viewed as a powder material morphology, microscopically observed to consist of a large number of two-dimensional thin films.

Furthermore, the thin film material, which appears macroscopically as a powder material, is composed of a large number of monolithic two-dimensional thin films dispersed or entangled, the structure of which is completely different from that of the nanoporous structure formed by the conventional dealloying reaction. The nanoporous structure obtained by the conventional dealloying reaction consists of three-dimensional network ligaments connected to form a whole, and its overall appearance is basically the same as that of the initial alloy before the dealloying reaction;
Furthermore, the two-dimensional thin-film material is a material in which the smallest unit of the material (e.g., a single powder particle, a monolithic film) has a large area and its dimension in the thickness direction is much smaller than the two dimensions in the area direction, and its thickness does not exceed 10 nm.

Furthermore, the titanate nanofilm has a thickness of 0.25 nm ~ 4 nm;
Furthermore, the titanate nanofilm has a thickness of 0.25 nm ~ 3 nm;
Preferably, the titanate nanofilm has a thickness of 0.25 nm ~ 2 nm;
Furthermore, the average area of the titanate nanofilm is greater than 500 nm²;
As a preference, the average area of the titanate nanofilm is greater than 5000 nm²;
As a further preference, the average area of the titanate nanofilm is greater than 20,000 nm².

Furthermore, the titanate nanofilm is predominantly a low crystallinity titanate;
Furthermore, the cationic element in the titanate is derived from the corresponding cationic element in the alkali;
Furthermore, the chemical composition of the titanate nanofilm material comprises Ti, O, and the corresponding cationic element in the alkali; for example, when the alkali is NaOH, the corresponding cationic element in the alkali is Na, then the chemical composition of the titanate nanofilm material comprises Ti, O, and the element Na;
Furthermore, the yield of the two-dimensional titanate nanofilm in the final solid product is its weight percent in the final product;
Furthermore, the yield of the two-dimensional titanate nanofilm in the final solid flocculent product is 95% ~ 100%;
Furthermore, the yield of the two-dimensional itanate nanofilm in the final solid flocculent product is 99% ~ 100%;
Furthermore, the yield of the two-dimensional titanate nanofilm in the final solid flocculent product is 99% ~ 100% at ambient pressure when the initial alloy is reacted with the alkaline solution at a temperature of *T_{f solution}*;
Furthermore, at ambient pressure, when the reaction temperature of the initial alloy with alkaline solution is *T_{f solution}*, the yield of the two-dimensional titanate nanofilm in the final solid flocculent product is 99%~100%, and the main product does not contain three-dimensional continuous network-like nanoporous structure or porous skeleton structure.

In the second aspect, the present invention also relates to a method of preparing a titanic acid nanofilm material, wherein the titanic acid nanofilm material is obtained by reacting the prepared product according to the first aspect thereof or the titanate nanofilm material according to the first aspect thereof with an acid solution, and then collecting the solid product.

By reacting with the acid solution, the residual alkali adsorbed on the surface of the titanate nanofilm is first neutralized, and then ion exchange takes place between the cations in the titanate nanofilm and the hydrogen ions in the acid solution, which resulting in the titanic acid nanofilm material. In addition, the product after the acid reaction is substantially identical to the main characteristics of the product described in the first aspect thereof;
Furthermore, the acid solution comprises at least one of hydrochloric acid, nitric acid, sulfuric acid, acetic acid, phosphoric acid, oxalic acid, picric acid, oleic acid, and perchloric acid;
Since the two-dimensional titanate nanofilm or the two-dimensional titanic acid nanofilm prepared by the present method is extremely thin, when the acid concentration is higher than 0.1 mol/L, there is obviously further dissolution of the titanic acid nanofilm in the acid solution. Therefore, in order to prevent further dissolution of the titanic acid nanofilm by reaction with the acid, the acid solution is a dilute acid solution and the hydrogen ion concentration therein is less than 0.1 mol/L;
As a preference, the acid solution has a hydrogen ion concentration of 0.0001 mol/L ~ 0.09 mol/L;
As a preference, the hydrogen ion concentration in the acid solution is 0.0001 mol/L ~ 0.05 mol/L;
As a further preference, the hydrogen ion concentration in the acid solution is 0.0001 mol/L ~ 0.01 mol/L.

Furthermore, the specific step of reacting the titanate nanofilm material with the acid solution is as follows: the titanate nanofilm material is dispersed in water, and the acid solution is gradually added while stirring so that the pH value of the mixed solution continuously decreases. Finally, the pH value of the mixed solution is controlled to be in the range of 2 ~ 5, and after 1 min~5 h, it is separated and dried, i.e., the nano titanic acid thin film is obtained. When the pH control is maintained between 2 ~ 5, i.e., the corresponding concentration of hydrogen ions in the mixed solution is 0.00001 mol/L ~ 0.01 mol/L, it can be ensured that the residual alkali adsorbed on the surface of the titanate nanofilm material during the whole process is first neutralized, and then the ion exchange between the cations in the titanate nanofilm material and the hydrogen ions in the acid solution takes place, and then the titanic acid nanofilm material that has not reacted significantly with the acid solution is obtained.

Furthermore, the prepared titanic acid nanofilm has a thickness of 0.25 nm ~ 4 nm;
Furthermore, the thickness of the prepared titanic acid nanofilm is 0.25 nm ~ 3 nm;
Preferably, the thickness of the prepared titanic acid nanofilm is 0.25 nm ~ 2 nm;
Furthermore, the average area of the individual prepared titanic acid nanofilm is greater than 500 nm²;
As a preference, the average area of the individual prepared titanic acid nanofilm material is greater than 5000 nm²;
As a further preference, the average area of the individual prepared titanic acid nanofilm material is greater than 20,000 nm²;
Furthermore, the titanic acid nanofilm is mainly of low crystallinity;
Furthermore, the chemical composition of the prepared titanic acid nanofilm material comprises the elements H, Ti and O;
Furthermore, the chemical composition of the prepared titanic acid nanofilm comprises H₄TiO₄.

In the third aspect, the present invention also relates to a method of preparing a TiO₂ nanosheet powder, which is prepared by heat treating the prepared product according to the second aspect thereof or the nano titanic acid film material according to the second aspect thereof.

Furthermore, the time of heat treatment is 1 min ~ 48 h;
Preferably, the heat treatment time is 10 min ~ 3 h;
Furthermore, the temperature range of the heat treatment is 400°C ~ 1000°C;
When a low value of the temperature range is selected, a longer time is required to change the nano titanic acid film into TiO₂ nanosheets, and when a high value of the temperature range is selected, a shorter time is required to change the titanic acid nanofilm into TiO₂ nanosheets;
Furthermore, during the heat treatment process, the titanic acid nanofilm morphology will undergo a transformation from thin film to sheet with a significant increase in thickness, and at the same time, a transformation from titanic acid to nano-TiO₂ will takes place.

Furthermore, the phase composition of the crystalline TiO₂ nanosheet powder comprises at least one of brookite type TiO₂, anatase type nano-TiO₂, and rutile type nano-TiO₂.

During the transformation process, there may be the coexistence of two crystalline types at certain heat treatment temperatures and times, such as the coexistence of "nano titanate thin film materials" and "anatase-type nano-TiO₂ flakes", and the coexistence of "anatase-type nano-TiO₂ flakes" and "rutile-type nano-TiO₂ flakes".

Furthermore, the TiO₂ nanosheets have a shape of a plate sheet;
Furthermore, the TiO₂ nanosheet has a thickness of 1 nm ~ 30 nm;
Furthermore, the TiO₂ nanosheet has a thickness of 1 nm ~ 20 nm;
Furthermore, the average area of the TiO₂ nanosheet is greater than 100 nm²;
Furthermore, the average area of the TiO₂ nanosheet is greater than 1000 nm²;
Furthermore, the average area of the TiO₂ nanosheet is greater than 4000 nm²;

In the fourth aspect, the present invention also relates to a method of preparing titanate nanotubes, which is prepared by the following steps:
The solid substance containing the product or titanate nanofilm described in the first aspect thereof or (and) the product or titanic acid nanofilm described in the second aspect thereof is sealed in a closed container with an alkaline solution, and subsequently subjected to a high temperature and high pressure treatment at a temperature *T₂* higher than that of the *T_{f solution}*; wherein the *T_{f solution}* is the boiling temperature of the alkali solution involved in the reaction at ambient pressure, and 100°C <*T₁* ≤ *T_{f solution}*<*T₂*; and after a certain time of reaction, the closed container is cooled and the pressure is restored to ambient pressure, and the final solid product is collected, i.e., titanate nanotubes are obtained.

Furthermore, the alkaline solution comprises at least one of NaOH, KOH, LiOH, RbOH, Ba(OH)₂, Ca(OH)₂, Sr(OH)₂ solution;
Furthermore, the solvent in the alkaline solution comprises water; as a preference, the solvent in the alkaline solution is water;
Furthermore, the concentration of alkali in the alkaline solution is 5.1 ~ 25 mol/L; as preferred, the concentration of alkali in the alkaline solution is 5.1 ~ 15 mol/L;
As a preference, the concentration of alkali in the alkaline solution is 7 ~ 15 mol/L; as a further preference, the concentration of alkali in the alkaline solution is 10 ~ 15 mol/L;
Furthermore, the concentration of alkali refers to the concentration of OH⁻ in the alkali;
Furthermore, the alkali in the alkaline solution mixed with the solid substance containing the product or the nano titanate film described in one aspect thereof or (and) the product or the nano titanic acid film described in the second aspect thereof is an excess dose of alkali, and the volume of the alkaline solution is more than 5 times the volume of the solid substance;
Furthermore, the volume of the alkaline solution is more than 10 times the volume of the solid state substance; Furthermore, the volume of the alkaline solution is more than 20 times the volume of the solid state substance;

As a preferred example.

The "solid substance containing the product or nano titanate film described in one aspect thereof or (and) the product or nano titanic acid film described in the second aspect thereof and the alkaline solution" is the solid flocculent product and the corresponding alkaline solution after the hydrogen generation reaction described in the first aspect thereof is completed after the steps 1 and 2;
That is, the solid flocculent product and the corresponding alkaline solution after the hydrogen generation reaction obtained in steps 1 and 2 mentioned in the first part thereof are sealed in a closed container, and then subjected to high temperature and high pressure treatment at a temperature *T₂* higher than that of *T_{f solution}*; wherein *T_{f solution}* is the boiling point temperature of the alkaline solution involved in the reaction at ambient pressure, and 100°C <*T₁*<*T*_{*f* solution}<*T₂*; and after a certain reaction time, the temperature of the closed vessel was lowered and the pressure was restored to ambient pressure, and the final solid product was collected, i.e., the titanate nanotubes were obtained.

This preferred solution does not require separation of the solid flocculent product and the corresponding alkaline solution before mixing with the alkali, nor does it require the alkaline solution to be cooled down and then warmed up (*T₁* <*T₂*), and the alkali concentration meets the requirements for the high temperature and high-pressure reaction of this preferred solution. Therefore, this is the most economical and simple operation scheme.

Furthermore, the high temperature and high-pressure treatment process involves the conversion of titanate thin film or (and) titanic acid thin film to tubular titanate, and 100°C <*T₁*<*T*_{*f* solution}<*T₂*;
Furthermore, the reaction is carried out in a closed vessel above ambient pressure so that the temperature of the alkaline solution can be heated above its boiling temperature at ambient pressure, *T_{f solution}*, thereby realizing the conversion of the titanate thin film or (and) titanic acid thin film to tubular titanate at high temperature and pressure.

Furthermore, in the closed vessel, when the alkaline solution species and concentration are determined, a certain determined value of temperature must correspond to a certain determined value of pressure, i.e. the value of pressure is a function of the value of temperature; the higher the temperature, the higher the pressure.

Furthermore, *T_{f solution}*<*T₂*< 300°C;
Furthermore, *T_{f solution}*<*T₂*< 250°C;
Furthermore, *T_{f solution}*<*T₂*< 200°C;
Furthermore, *T_{f solution}*< 120°C <*T₂*< 200°C;
Furthermore, *T_{f solution}*<140°C <*T₂*< 200°C;
Furthermore, *T_{f solution}*<150°C <*T₂*< 180°C;
Furthermore, the *T₂* temperature autoclave treatment time is 0.1 h ~ 10 h; Furthermore, the *T₂* temperature autoclave treatment time is 0.1 h ~ 1 h; Furthermore, the *T₂* temperature autoclave treatment time is 0.1 h ~ 0.5 h; Furthermore preferably, the *T₂* temperature autoclave treatment time is 0.1 h ~ 0.2 h;
Since the product can also be obtained by continuing the holding time after the reaction equilibrium, the holding time can also be selected as a longer time value.

Furthermore, the titanate nanotubes have an outer diameter of 2 nm ~ 20 nm;
Furthermore, the titanate nanotube has an outer diameter of 3 nm ~ 15 nm;
Furthermore, the titanate nanotube has an average length greater than 5 times its average outer diameter.

Furthermore, the titanate nanotubes are predominantly of low crystallinity;
Furthermore, the cationic elements in the titanate nanotubes are derived from the corresponding cationic elements in the alkali;
Furthermore, the chemical composition of the titanate nanotubes comprises Ti, O, and the corresponding cationic element in the alkali; for example, when the alkali is NaOH, the corresponding cationic element in the alkali is Na, then the chemical composition of the titanate nanotubes comprises Ti, O, and the element Na.

Furthermore, the titanate nanotubes are mainly prepared by high-temperature and high-pressure treatment of titanate nanofilms, and therefore, when the high-temperature and high-pressure treatment is incomplete, the resulting product will also contain titanate nanofilms;
Furthermore, the weight percentage content of the titanate nanotubes in the final product is higher than 50%;
Furthermore, the weight percentage content of the titanate nanotubes in the final product is higher than 90%.

In the fifth aspect, the present invention also relates to a method of preparing titanic acid nanotubes, wherein the titanic acid nanotubes are obtained by reacting the prepared product according to the fourth aspect thereof or the titanate nanotubes according to the fourth aspect thereof with an acid solution and collecting the solid product.

Furthermore, the acid solution comprises at least one of hydrochloric acid, nitric acid, sulfuric acid, acetic acid, phosphoric acid, oxalic acid, picric acid, oleic acid, and perchloric acid.

By reacting with the acid solution, the residual alkalis adsorbed on the surface of the titanate nanotubes are first neutralized, and then ion exchange between the cations in the titanate nanotubes and the hydrogen ions in the acid solution takes place, and then titanic acid nanotubes are obtained.

Since titanic acid nanotubes have a slightly smaller specific surface area than titanic acid films, the reaction can be carried out using an acid of a slightly higher concentration than that described in the second aspect thereof;
Furthermore, the concentration of hydrogen ions in the acid solution is 0.001 mol/L ~ 0.2 mol/L;
As a preference, the hydrogen ion concentration in the acid solution is 0.001 mol/L ~ 0.1 mol/L;
As a preference, the hydrogen ion concentration in the acid solution is 0.001 mol/L ~ 0.05 mol/L;

Furthermore, the specific step of reacting the titanate nanotube material with the acid solution is as follows: the titanate nanotube material is dispersed in water, and the acid solution is gradually added while stirring to decrease the pH value of the mixed solution continuously. Finally, the pH value of the mixed solution is controlled to be between 2 ~ 4, for 1 min ~ 5 h and the titanic acid nanotube material is obtained by separation, cleaning and drying. Since the titanate nanotubes were rolled up with a certain thickness, when the pH value control was kept between 2 ~ 4, i.e., the concentration of hydrogen ions corresponding to 0.0001 mol/L ~ 0.01 mol/L in the mixed solution, it could be ensured that the residual alkali adsorbed on the surface of the titanate nanotube material during the whole process would be neutralized firstly, and then cationic exchange between cationic ions in the titanate nanotube material and hydrogen ions in the acid solution would take place. Thus titanic acid nanotube materials that did not react significantly with the acid solution were obtained.

Furthermore, the titanic acid nanotubes have an outer diameter of 2 nm ~ 20 nm;
Furthermore, the titanic acid nanotubes have an outer diameter of 3 nm ~ 15 nm;
Furthermore, the titanic acid nanotube has an average length greater than 5 times its average outer diameter;
Furthermore, the titanic acid nanotubes are predominantly of low crystallinity;
Furthermore, the titanic acid nanotubes have a chemical composition comprising the elements H, Ti, and O;
Furthermore, the titanic acid nanotubes comprise H₄TiO₄.

In the sixth aspect, the present invention also relates to a method of preparing TiO₂ nanotubes/rods, wherein the TiO₂ nanotubes/rods are prepared by heat treating the prepared product according to the fifth aspect thereof or the titanic acid nanotubes according to the fifth aspect thereof.

Furthermore, the heat treatment process generates nano-scale TiO₂;
Furthermore, the heat treatment time is 1 min ~ 48 h;
As a preference, the heat treatment time is 10 min ~ 3 h;
Furthermore, the temperature of the heat treatment is 400°C ~ 1000°C;
Furthermore, the conversion of titanic acid nanotubes to TiO₂ nanotubes/rods takes place during the heat treatment;

When the temperature is selected at a low value of the range, a longer time is required to complete the transformation of titanic acid nanotubes to crystalline TiO₂ nanotubes/rods, and when the temperature is selected at a high value of the range, a shorter time is required to complete the transformation of titanic acid nanotubes to crystalline TiO₂ nanotubes/rods.

Furthermore, the crystalline TiO₂ nanotubes/rods means that the shape of the crystalline TiO₂ nanotubes/rods comprises at least one of a tube, a rod; when the inner diameter of the tube is reduced to zero, it is the shape of the rods;
Furthermore, the phase composition of the crystalline TiO₂ nanotubes/rods comprises at least one of brookite-type TiO₂, anatase-type TiO₂, rutile-type TiO₂.

Furthermore, the average length of the TiO₂ nanotubes/rods is greater than three times their average outer diameter;
Furthermore, the TiO₂ nanotube/rod has an outer diameter of 3 nm ~ 25 nm;
Furthermore, the TiO₂ nanotube/rod has an outer diameter of 4 nm ~ 20 nm;
Furthermore, the main chemical composition of the TiO₂ nanotubes/rods comprises Ti, O.

In the seven aspect, the present invention also relates to another method of preparing titanate nanotubes, comprising the following steps:
step 1), providing an initial alloy comprising a T element and a Ti element, wherein the T element comprises at least one of Al, Zn, and the phase composition of the initial alloy comprises a T-Ti intermetallic compound;
step 2), sealing the initial alloy with an alkali solution in a closed container, and subsequently heating the temperature of the closed reaction system to *T₂* and holding it for a period of time; wherein 100°C <*T_{f solution}*<*T₂*; *T_{f solution}* is the boiling point temperature of the alkali solution involved in the reaction at ambient pressure, and the pressure in the closed container at the *T₂* temperature is higher than ambient pressure;
step 3), cooling the closed container and restoring the pressure to ambient pressure, and collect the solid product, i.e., obtain the titanate nanotube material.

In the step 1), as well as the detailed description of step 1), are identical to step 1 and its detailed description described in the first aspect (a method for preparing a titanate nanofilm material) (see above, part of the steps described in one of the first aspect);
In the step 2).

Furthermore, the initial alloy and the alkaline solution are sealed in a closed vessel at room temperature and pressure, and the temperature of the closed reaction system is subsequently heated to a high temperature and pressure state of *T₂* and held for a certain period of time; wherein 100°C <*T_{f solution}*<*T₂*;
Furthermore, the alkaline solution comprises at least one of NaOH, KOH, LiOH, RbOH, Ba(OH)₂, Ca(OH)₂, Sr(OH)₂ solution;
Furthermore, the solvent in the alkaline solution comprises water; as a preference, the solvent in the alkaline solution is water;
Furthermore, the concentration of alkali in the alkaline solution is 5.1 ~ 25 mol/L;
As a preference, the concentration of alkali in the alkaline solution is 5.1 ~ 15 mol/L;
As a preference, the concentration of alkali in the alkaline solution is 7 ~ 15 mol/L; as a further preference, the concentration of alkali in the alkaline solution is 7 ~ 12 mol/L;
As a further preference, the concentration of alkali in the alkaline solution is 10 ~ 15 mol/L;
Furthermore, the concentration of alkali refers to the concentration of OH⁻ in the alkali;
Furthermore, the alkali in the alkaline solution reacting with the initial alloy is an overdose, and the volume of the alkaline solution is more than 5 times the volume of the initial alloy, so that the reaction can be made to proceed all the time at a higher alkali concentration;
Furthermore, the volume of the alkaline solution is more than 10 times the volume of the initial alloy;
Furthermore, the volume of the alkaline solution is more than 20 times the volume of the initial alloy;
Furthermore, the temperature at which the initial alloy reacts with the alkaline solution is the temperature of the alkaline solution;
It can be understood that the initial alloy and the alkaline solution react very slowly in the preparation and initial stages of the reaction at room temperature and pressure. After the initial alloy and the alkaline solution are sealed in a closed container, the hydrogen generated from the reaction of the T elements in the initial alloy with the alkaline solution is also sealed in the closed container, thereby increasing the pressure of the closed container.

Furthermore, the closed reaction system comprises, the initial alloy, the alkaline solution, and the closed container; the temperature of the closed reaction system is the temperature corresponding to the initial alloy, the alkaline solution, and the closed container;
Furthermore, the temperature of the initial alloy and the alkaline solution in the closed vessel is heated from room temperature to a temperature *T₂* at a heating rate of greater than 10 °C/min;
Furthermore, the time for heating the temperature of the initial alloy and the alkaline solution in the closed container from room temperature to the temperature *T₂* is less than 30 min;
Furthermore, 100°C <*T_{f solution}*<*T₂*< 300°C;
Furthermore, 100°C <*T_{f solution}*<*T₂*< 250°C;
Furthermore, 100°C <*T_{f solution}* <*T₂* < 200°C;
Furthermore, 100°C <*T_{f solution}* < 120°C <*T₂* < 200°C;
Furthermore, 100°C *<T_{f solution}* < 140°C *<T₂* < 200°C;
Furthermore, 100°C *<T_{f solution}* < 150°C <*T₂* < 180°C;
Furthermore, the holding time of the closed reaction system at the temperature *T₂* is 0.1 h ~ 20 h; preferably 0.1 h ~ 2 h, preferably 0.1 h ~ 1 h, preferably 0.1 h ~ 0.5 h, further preferably 0.2 h ~ 0.4 h;
Since the product can also be obtained by continuing the holding time after the reaction has equilibrated, the holding time can also be selected as a longer time value.

Furthermore, the initial alloy in the closed vessel and the alkaline solution undergoes a hydrogen generation and T-removal reaction in the heating stage from room temperature to *T₂* temperature, which mainly generates nanoporous titanate intermediate products;
Furthermore, the nanoporous titanate intermediates are converted into titanate nanotubes during the holding stage at *T₂* temperature of the closed reaction system;
Furthermore, the pressure of the closed reaction system is higher than ambient pressure;
Furthermore, the pressure of the closed reaction system is a combination of the pressure of the solution of the closed system at the *T₂* temperature and the pressure of the hydrogen produced by the hydrogen evolution reaction at the *T₂* temperature;
It is to be understood that, because of the pressure caused by the generated hydrogen, the pressure of the closed reaction system is higher than the pressure of the solution in the closed system at the temperature of *T₂*; such a high-pressure environment creates conditions for the transformation of the nanoporous titanate intermediate product into titanate nanotubes;

In the step 3).
Furthermore, lowering the temperature of the closed vessel to near room temperature and restoring the pressure to ambient pressure;
Furthermore, the temperature near room temperature is a temperature not higher than 60°C;
Furthermore, the titanate nanotubes have an outer diameter ranging from 2 nm ~ 20 nm;
Furthermore, the titanate nanotubes have an outer diameter ranging from 3 nm ~ 15 nm;
Furthermore, the titanate nanotube has an average length greater than 5 times its average outer diameter;
Furthermore, the titanate nanotubes are predominantly of low crystallinity;
Furthermore, the cationic element in the titanate nanotubes is derived from the corresponding cationic element in the alkali;
Furthermore, the chemical composition of the titanate nanotubes comprises Ti, O, and the corresponding cationic element in the alkali; for example, when the alkali is NaOH, the corresponding cationic element in the alkali is Na, then the chemical composition of the titanate nanotubes comprises Ti, O, and the element Na.

Furthermore, when the high temperature and high-pressure treatment is incomplete, the resulting product will also contain titanic acid nanofilms;
Furthermore, the titanate nanotubes contain more than 50% by weight percentage in the final product;
Furthermore, the titanate nanotubes contain more than 90% by weight percentage in the final product.

In the eighth aspect, the present invention also relates to another method of preparing titanic acid nanotubes, wherein the titanic acid nanotubes are obtained by reacting the prepared product according to the seventh aspect thereof or the titanate nanotubes according to the seventh aspect thereof with an acid solution and collecting the solid product.

Furthermore, the acid solution comprises at least one of hydrochloric acid, nitric acid, sulfuric acid, acetic acid, phosphoric acid, oxalic acid, picric acid, oleic acid, perchloric acid.

By reacting with the acid solution, the residual alkali adsorbed on the surface of the titanate nanotubes is first neutralized, and then ion exchange between the cations in the titanate nanotubes and the hydrogen ions in the acid solution takes place, and then the titanic acid nanotubes are obtained.

Since titanic acid nanotubes have a slightly smaller specific surface area than titanic acid films, the reaction can be carried out by means of a slightly higher concentration of acid;
Furthermore, the concentration of hydrogen ions in the acid solution is 0.001 mol/L ~ 0.2 mol/L;
As a preference, the hydrogen ion concentration in the acid solution is 0.001 mol/L ~ 0.1 mol/L;
As a preference, the hydrogen ion concentration in the acid solution is 0.001 mol/L ~ 0.05 mol/L;

Furthermore, the specific step of reacting the titanate nanotube material with the acid solution is as follows: the titanate nanotube material is dispersed in water, and the acid solution is gradually added while stirring to decrease the pH value of the mixed solution continuously. Finally, the pH value of the mixed solution is controlled to be between 2 ~ 4, after 1 min ~ 5 h, the titanic acid nanotube material is obtained by separation, cleaning and drying. Since the titanic acid nanotubes were rolled up with a certain thickness, when the pH value control was kept between 2 ~ 4, i.e., the concentration of hydrogen ions corresponding to 0.0001 mol/L ~ 0.01 mol/L in the mixed solution, it could be ensured that the residual alkali adsorbed on the surface of the titanate nanotube material during the whole process would be neutralized firstly, and then cationic exchange between cationic ions in the titanate nanotube material and hydrogen ions in the acid solution would take place. Thus titanic acid nanotube materials that did not react significantly with the acid solution were obtained
Furthermore, the titanic acid nanotubes have an outer diameter of 2 nm ~ 20 nm;
Furthermore, the titanic acid nanotube has an outer diameter of 3 nm ~ 15 nm;
Furthermore, the titanic acid nanotube has an average length greater than 5 times its average outer diameter;
Furthermore, the titanic acid nanotubes are predominantly of low crystallinity;
Furthermore, the titanate nanotubes have a chemical composition comprising the elements H, Ti, and O;
Furthermore, the titanate nanotubes contain H₄TiO₄.

In the ninth aspect, the present invention also relates to another method of preparing TiO₂ nanotubes, which are prepared by the heat treating the prepared product according to the eighth aspect or the titanate nanotubes according to the eighth aspect.

Furthermore, the heat treatment process generates nano-scale TiO₂;
Furthermore, the heat treatment time is 1 min ~ 48 h;
As a preference, the heat treatment time is 10 min ~ 3 h;
Furthermore, the temperature of the heat treatment is 400°C ~ 1000°C;
Furthermore, the conversion of titanic acid nanotubes to TiO₂ nanotubes/rods takes place during the heat treatment;

When the temperature is selected at a low value of the range, a longer time is required to complete the transformation of titanic acid nanotubes to crystalline TiO₂ nanotubes/rods, and when the temperature is selected at a high value of the range, a shorter time is required to complete the transformation of titanic acid nanotubes to crystalline TiO₂ nanotubes/rods.

Furthermore, the crystalline TiO₂ nanotubes/rods means that the shape of the crystalline TiO₂ nanotubes/rods comprises at least one of tubes, rods; when the inner diameter of the tubes is reduced to zero, it is the shape of the rods;
Furthermore, the phase composition of the crystalline TiO₂ nanotubes/rods comprises at least one of brookite-type TiO₂, anatase-type TiO₂, rutile-type TiO₂.

Furthermore, the average length of the TiO₂ nanotubes/rods is greater than three times their average outer diameter;
Furthermore, the TiO₂ nanotube/rod has an outer diameter of 3 nm ~ 25 nm;
Furthermore, the TiO₂ nanotube/rod has an outer diameter of 4 nm ~ 20 nm;
Furthermore, the main chemical composition of the TiO₂ nanotubes/rods comprises Ti, O.

In the tenth aspect, the present invention further relates to an application of the product material prepared by the preparation method according to any one of the first to the ninth aspects thereof in polymer-based nanocomposites, ceramic materials, photocatalytic materials, hydrolysis for hydrogen production, hydrophobic materials, wastewater degrading materials, bactericidal coatings, anti-corrosion coatings, and marine coatings. Wherein the marine coating comprises an anti-fouling coating.

The beneficial effects of the present invention are mainly reflected in the following aspects:
Firstly, the ambient pressure and high efficiency preparation of titanate nanofilm materials was realized by using cheap and readily available Ti-T intermetallic compounds as titanium source, and reacting the Ti-T intermetallic compounds with alkaline solution near the boiling temperature of alkaline solution under ambient pressure. Based on this, the preparation of low-cost titanic acid nanofilm materials and TiO₂ nansheet powder has been further enabled. Combined with the subsequent high-temperature and high-pressure reactions, it also enables the efficient and low-cost preparation of titanate nanotubes, titanic acid nanotubes, and TiO₂ nanotubes/rods.

Although the strong alkaline hydrothermal method is currently a more mature process for the preparation of titanate nanomaterial, titanic acid nanomaterial and TiO₂ nanomaterial, the process usually involves the formation of a titanate salt (for example, sodium titanate) by the use of TiO₂ nanoparticles and a high concentration of strong alkali (for example, NaOH solution) as starting materials for a prolonged period of time by hydrothermal synthesis at high temperatures, which is usually followed by a neutralization and acid washing to obtain titanic acid nanotubes. For example, in 2001, it was reported in the literature that titanate nanotubes with a tube length of tens to hundreds of nanometers and an inner diameter of 5.3 nm could be obtained by hydrothermal reaction in a high-pressure reaction vessel for 72 h under the condition of 130°C using industrial anatase-type TiO₂ and a 10 mol/L sodium hydroxide solution as the starting materials, followed by neutrality. Other methods reported in the literature for the preparation of sodium titanate also include: weighing NaOH and TiO₂ according to a stoichiometric relationship and then transferring them to a polytetrafluoroethylene high-pressure reactor, mixing them and then keeping them at a temperature of 230°C for 48 h ~ 96 h, and then taking them out, washing and drying them to obtain sodium titanate nanotubes when cooled down to room temperature, and further acid-washing to obtain titanic acid nanotubes. It can be seen that the conventional strong alkaline hydrothermal method is characterized by 1) using TiO₂ as the titanium source; 2) being carried out in a high-pressure reaction vessel, which requires airtight and high-pressure conditions; 3) being carried out at higher temperatures; 4) requiring a very long reaction time in terms of hours or days; and 5) the product obtained is generally titanate nanotubes or titanic acid nanotubes.

In contrast, in preparing titanates film and subsequent products thereof, the present invention, in its first to third aspects, although also employing a strong alkaline solution, is markedly different from the conventional strong alkaline hydrothermal method in that 1) the Ti-T intermetallic compound is used as the titanium source; 2) the reaction can be carried out in an open vessel with ambient pressure, and does not necessarily require a high-pressure closed vessel; and 3) it is carried out at a temperature near the boiling point or the boiling point temperature of the alkaline solution, and does not need to be carried out at a ultra-high temperature, and the upper limit of the temperature is the boiling point of the alkaline solution, which is very easy to control precisely; 4) the reaction can be completed in a few minutes or even a few seconds; 5) the obtained product is a titanate nanofilm material, and on the basis of this, titanic acid nanofilm materials can be further prepared, as well as TiO₂ nanosheet powders and so on.

When titanate nanotubes and their subsequent products are further prepared in the fourth to sixth aspects thereof, although a high-temperature, high-pressure reaction is also employed, what is added to the high-pressure reaction vessel is the titanate nanofilm material that has already been prepared within a short period of time, as well as the corresponding original alkaline reaction solution. Therefore, it is not necessary to employ TiO₂ as the titanium source as in the conventional hydrothermal reaction, which requires several hours to break the Ti-O bond before any further reaction takes place to produce the TiO₂ nanotubes. Specifically, even if the initial alloy is a powder or strip of tens of micrometers, due to the special environment existing in the alkaline solution at the boiling temperature, the titanate nanofilm material can be generated after a few minutes or even tens of seconds of reaction at ambient pressure and near the boiling temperature of the alkaline solution. This greatly reduces the time for the preparation of the titanate Nanofilm. Due to the ultra-thin thickness of the resulting titanate nanofilm, only a short period of high temperature and high pressure treatment is required to convert the titanate nanofilm into titanate nanotubes, reatly reducing the reaction time. The combination of the ambient pressure reaction time and the high-pressure reaction time is still much less than the reaction time required by other reported or disclosed preparation methods. Therefore, whether preparing titanate film or tubular titanate, the total reaction time of the entire preparation process described herein in terms of ambient pressure reaction time and high-pressure reaction time combined, is still much less than the reaction time required by other reported or disclosed preparation methods, which is of extremely obvious positive advances.

This apparent beneficial effect, in particular the great reduction in the preparation time and temperature of the target product, is closely related to the use of Ti-T intermetallic compounds as a titanium source and the reaction at or near the boiling temperature *T_{f} solution.*

When the reaction occurs at ambient pressure and at the boiling point temperature *T_{f solution}* of the alkaline solution, the composition of the solution in the reaction system undergoes an obvious particular change, as shown below: in the temperature interval below the boiling point temperature of the alkaline solution, the solvent exists mainly as liquid water and the reaction system is in an ordinary state; however, near or at the boiling point temperature of the alkaline solution, the solvent also contains water in the critical state which is undergoing a transition from liquid water to gaseous water, in addition to the liquid water with the gaseous water produced by boiling. Moreover, due to the presence of the reactants in the solution and theas-generated nano-scale products, it provides a large number of plasmas for boiling and vaporization according to the principle of heterogeneous nucleation, thus making the reaction system in a specific environment of full boiling and evaporation. In this specific environment, the content and state of dissolved atmospheric gases (oxygen, nitrogen) in water are also extremely specific (because the large number of boiling water vapors, hydrogen generated by the reaction of T and alkali, changing the conditions of saturation partial pressure of dissolved gases in water). At the same time, the reaction of Ti-T intermetallic compounds with concentrated alkaline solution in the process of T-removal from the alloy, will generate a large amount of hydrogen. These hydrogen generated within a short period of time and a large number of heterogeneous nuclei boiling vapors produced by water vapor, which result in the violent expansion will further promote the nano-fragmentation reaction and reconfiguration process of the shape and the composition at the interface of the initial alloy; and the T salt dissolved in alkaline solution will also change the composition of the reaction solution. These many characteristics of the solution at the boiling point temperature provide a very specific reaction environment for the reaction. Under this special reaction environment, a special reaction process will take place, so that the initial alloy will undergo efficient nano-fragmentation and shape and composition reconfiguration through the hydrogen generation reaction, which makes it difficult to stabilize the three-dimensional network-like continuous nanoporous structure generated by the low- or room-temperature dealloying reaction, and instead, flocculated solid products consisting of predominantly titanate nanofilms are generated through a special nano-fragmentation and shape and composition reconfiguration process. This not only significanlty reduces the preparation time of the target product, but also achieve a high yield of titanate nanofilms. Moreover, the constant temperature of the boiling point of a specific alkali solution allows extremely precise temperature control, making the control of product morphology and composition extremely accurate and easy.

In addition, when the Ti-T intermetallic compound is used as the titanium source, even if the titanium source is a micrometer-sized powder or strip sample, the reaction mechanism is significantly different compared to the conventional hydrothermal preparation of titanates nanotubes from nano-TiO₂ with strong alkali. Specifically, the concentrated alkaline solution used in the present invention mainly serves two purposes: 1) When the Ti-T intermetallic compound reacts with the strong alkaline solution at or near the boiling temperature of the solution, the first process that happens under the special reaction environment is the extremely rapid dealloying reaction between T and the strong alkaline solution, forming the water-soluble T salt, and the violent generation of hydrogen gas. When T enters the solution as T salt, Ti atoms in the Ti-T intermetallic compound are released, and Ti can be easily combined with elements such as O and rapidly combined in a specific way to generate titanate films, and this process can be completed in a few seconds at the shortest. 2) The presence of alkali allows the released Ti atoms to combine with the cations and oxygen elements in the alkali solution to form titanate nanofilms in a time as short as a few seconds in the special environment near the boiling point temperature of the alkaline solution. In contrast, the conventional high-pressure hydrothermal method uses TiO₂, which has a very high stability, as the Ti source. Even if the TiO₂ is a nanometer-sized powder, it still needs to be reacted under high pressure, high temperature, and several hours to destroy the Ti-O bond structure of the TiO₂ in advance, so that the Ti can be released and then be combined with the O and other elements again in a new and specific way to generate titanate. There is a comparative example provided in the examples of the present invention, when anatase-type nano TiO₂ with a particle size of 50-100 nm is used as the Ti source, and, it shows almost no change and remains anatase-type nano TiO₂ with a particle size of 50-100 nm (the size of the particle size can be estimated to be unchanged by the half-height width of the XRD peaks), after reacting at the boiling temperature of 10 mol/L aqueous sodium hydroxide solution for 10 min. Therefore, in addition to the special environment generated at the boiling temperature of the solution, the selection of the titanium source through Ti-T intermetallic compounds is also very important for the rapid and short-term preparation of the reaction products.

Secondly, the facil preparation conditions of two-dimensional titanate nanofilm materials and two-dimensional titanic acid nanofilm materials have been creatively invented. The initial alloy reacts with alkaline solution at 100°C <*T₁* ≤ *T_{f solution}*, which is very important for the preparation of two-dimensional thin film-like products with microscopic morphology. In one comparative example, when the TiAl₃ intermetallic compound initial alloy powder was reacted with 10 mol/L NaOH solution at 35°C for 2 h at ambient pressure, the shape of the original initial alloy powder before and after the reaction was approximately unchanged, and it was still the original crushed and angular powder particles, and it did not generate a large number of monolithic two-dimensional thin-film-like products in the microstructure, but rather a nanoporous or porous skeleton structure, and this nanoporous structure through the three-dimensional network connection constitutes the appearance of the original alloy powder shape consistent with the appearance of the morphology. Therefore, the reaction between the initial alloy and the alkaline solution occurring at a lower temperature near room temperature is completely different from that of the present invention in the temperature range of 100°C <*T₁* ≤ *T_{f solution}*, and the product morphology is completely different, and the present invention creatively invents a method of preparing two-dimensional titanate nanofilms and two-dimensional titanic acid nanofilm materials from the initial alloy containing T-Ti intermetallic compounds.

In the present invention, it was found that when a concentrated hot alkaline solution is used to react with the initial alloy containing T-Ti intermetallic compounds, the appearance and morphology of the product obtained after the start of the reaction is completely changed compared to that of the initial alloy, if the temperature of the reaction solution is greater than 100°C. For example, when the appearance and morphology of the original initial alloy was granular with angular corners, the product obtained was in the form of a two-dimensional nanofilm, which was in the form of a solid flocculent when viewed by the naked eye, and was observed by TEM observation to be a large number of very thin 2D nanofilms spread on the carbon network consisting of agglomerates, rather than the original solid powder particles or strips (see examples and pictures). When the reaction temperature is higher than 100°C, you can get a high 2D titanate nanofilm yield, which is generally 95% ~ 100%; when the reaction temperature is taken at ambient pressure at the boiling point of alkaline solution, you can get the highest yield of 2D titanate nanofilm, which is generally 99% ~ 100%;
Third, the process of preparing titanate nanotubes in the fourth aspect thereof and the seventh aspect thereof can both greatly reduce the preparation time of the product as compared to the conventional preparation method using TiO₂ nanoparticles as precursors. Specifically, the difference between the seventh aspect thereof and the fourth aspect thereof is that the fourth aspect thereof firstly prepares a titanate nanofilm or a titanic acid nanofilm in accordance with the preparation method described in the first or second aspect thereof, and then converts the film into titanate nanotubes at a high temperature and high pressure treatment; whereas in the seventh aspect thereof, the process of preparing a two-dimensional titanate nanofilm or a titanic acid nanofilm is skipped, while nanoporous titanate is formed in the preparation stage and the heating-up period, and converted to titanate nanotubes in the high temperature and high pressure holding stage. The fourth aspect thereof and its preferred example of the hydrogen evolution and T-removal reaction is carried out at 100°C < *T₁* ≤ *T_{f solution}*, whereby the preparation of a two-dimensional nanoporous titanate film can be realized in a very short time due to the utilization of the vigorous hydrogen evolution and T-removal reaction (as stated in the first aspect thereof), and therefore the subsequent high temperature and high pressure reaction is required only for a relatively short time for the preparation of titanate nanotubes. For the seventh aspect, the process of the hydrogen evolution and T-removal reaction in the elevated temperature stage is slower and less violent, so the violent hydrogen evolution and T-removal reaction is not utilized, and what is obtained in its elevated temperature stage is mainly the nanoporous titanate structure. From this point of view, it is more difficult in converting the nanoporous titanate structure into titanate nanotubes at the high temperature and high pressure holding stage, and it takes longer time than that in the fourth aspect; however, the closed vessel in the seventh aspect contains an additional pressure generated by the generated hydrogen, resulting a higher pressure than that of the fourth aspect at the same *T₂* temperature, in which promote the formation of the titanate nanotubes. Thus, from this point of view, it is less difficult to form titanate nanotubes at the high temperature and high pressure holding phase of the seventh aspect than that in the fourth aspect. The actual process is the result of the game between the two situations. However, both the fourth aspect and the seventh aspect greatly reduce the preparation time of titanate nanotubes and simplify the process, which is of positive significance.

Fourthly, the precise control of the composition and morphology of the product can be realized through the precise control of the reaction conditions. Specifically, in the present invention, when the concentration of alkali in the solution is determined, the boiling point temperature to which the solution can be heated under ambient pressure is also determined, which means that the pressure and temperature in the reaction conditions are precisely determined. At the boiling point temperature of the alkaline solution, any excess heat added to the solution is converted to the heat of vaporization of water without raising the temperature of the solution, which makes it possible to keep the temperature of the solution constant at the boiling point temperature by continuous heating. Even though the dealloying process of Ti-T intermetallic compounds generates a large amount of latent heat of reaction during the reaction process, the temperature of the reaction solution can still be maintained at the boiling point temperature of the solution.

In contrast, conventional high-pressure hydrothermal synthesis carries out the synthesis of products at high temperatures and pressures. When it is necessary to terminate the reaction, it is necessary to slowly reduce the pressure and temperature to normal temperature and ambient pressure, and then transfer the sample, which takes a certain amount of time to complete. Generally speaking, for chemical reactions, a certain temperature and pressure condition corresponds to a certain composition and shape of the product. When the temperature and pressure of the alkaline solution cannot be quickly changed to normal temperature and ambient pressure, and transferred in time, the equilibrium of the reactants at the original temperature and pressure is broken, and certain changes in composition and appearance may occur at other high temperatures and high pressures. The preparation process of the first aspect of the present invention can be carried out in an open container at ambient pressure, and when it is necessary to terminate the reaction, it is only necessary to quickly add cold water or room temperature water to the reaction solution within a few seconds, or to cool it through a cold filter, so that it is possible to almost instantaneously reduce the temperature and concentration of the reaction system to the temperature and concentration at which the reaction can no longer be take place, and preserve the composition and morphology of the original equilibrium products of the reaction. Therefore, the solution and method provided by the present invention can obtain two-dimensional titanate nanofilm materials with very stable composition and morphology, and based on which, titanic acid nanofilm materials and nano-TiO₂ flake powder with stable composition and morphology as well as other subsequent products can be further prepared. Stable control of the composition and morphology of the product is one of the key factors for its wide application, which is of great importance.

Fifthly, the large-scale industrial preparation of titanate nanofilms, titanic acid nanofilms, TiO₂ nanosheets, titanate nanotubes, titanic acid nanotubes, and TiO₂ nanotubes has been made possible.

One of the key points in the invention of the first aspect is conducting the reaction at ambient pressure without the requirement for high-pressure and closed containers. The reaction temperature of the solution is at or near the boiling point temperature (according to the alkali concentration in the solution, the temperature is roughly in the range of 105°C ~ 180°Cas a relatively mild condition). The titanium source is mainly based on Ti-T intermetallic compounds, which can be prepared in large scale through the "alloy smelting + casting + crushing" or "alloy smelting + melt spinning" and other methods, and the required raw materials are common materials such as Ti, T, etc. Especially importantly, the critical reaction time can be as short as a few seconds to a few minutes, which is extremely efficient. Moreover, the reaction temperature, pressure and other conditions can be precisely controlled and the reaction can be terminated quickly to obtain the desired products. All these features greatly simplify the production process, improve the production efficiency, and reduce the production cost, so that the low-cost and efficient large-scale preparation of the corresponding products has become possible.

Therefore, the preparation method of the present invention is characterized by a simple process, easy operation, high efficiency, low cost, and can prepare a variety of nano titanates, nano titanic acid, and nano TiO₂ materials including nanofilms, nanotubes, and other morphologies, which are promising for application in the fields of polymer-based nanocomposites, ceramic materials, photocatalytic materials, hydrolysis of hydrogen, hydrophobic materials, wastewater degrading materials, bactericidal coatings, anti-corrosion coatings, marine coatings, and so on.

### BRIEF DESCRIPTION OF THE DRAWINGS

Fig. 1 shows the low magnification and high magnification TEM photographs of a titanate nanofilm made in Example 1 of the present invention;
Fig. 2 shows the low magnification and high magnification TEM photographs of a titanic acid nanofilm made in Example 1 of the present invention;
Fig. 3 shows the low magnification and high magnification TEM morphologies, and the diffraction spectra of anatase-type TiO₂ nano-flake powder produced in Example 1 of the present invention;
Fig. 4 shows the TEM photograph of a titanic acid nanofilm produced in Example 2 of the present invention;
Fig. 5 shows the low magnification and high magnification TEM photographs of anatase-type TiO₂ nanosheet powder produced in Example 2 of the present invention;
Fig. 6 shows the XRD spectrum of anatase-type TiO₂ nanosheet powder produced by Example 2 of the present invention;
Fig. 7 shows the XRD spectrum of the product made in comparative Example 1 of the present invention;
Fig. 8 shows the XRD spectrum of the anatase TiO₂ nanopowder of comparative Example 1 of the present invention;
Fig. 9 shows the low magnification and high magnification TEM photographs of the reaction product in comparative Example 2 of the present invention.

### DETAILED DESCRIPTION OF EMBODIMENTS

Hereinafter, the described technical solutions will be further illustrated by the following specific examples:

### Example 1

The present example provides a method of preparing a sodium titanate nano-film material, a titanic acid nano-film material, and a TiO₂ nanosheet powder and a use, comprising the following steps:
Weighing the metallic Ti and Al raw materials in accordance with the ratio of Ti₂₅Al₇₅ (atomic percentage), melting these raw materials to obtain an alloy melt with the composition of Ti₂₅Al₇₅. Then an initial alloy ribbon with a thickness of ~30 µm was prepared form the alloy melt by a rapid solidification method through melt spinning with a copper roller. The initial alloy ribbon mainly consists of TiAl₃ intermetallic compounds.

Under ambient pressure, 0.25 g of the above-made Ti₂₅Al₇₅ initial alloy ribbon was added into 50 ml of aqueous NaOH solution at a concentration of 10 mol/L at the temperature of its boiling point (~119°C) with continue stirring. The Ti₂₅Al₇₅ initial alloy ribbon undergoes nano-fragmentation during reaction with concentrated alkaline solution through intense hydrogenation and Al-removal reactions, and simultaneously undergoes shape and compositional reconfiguration to generate solid flocculated products diffusely distributed in alkaline solution.

The hydrogenation and Al-removal reaction was completed within 15 s, and the reaction temperature was hold for 2 min to ensure the complete completion of the reaction, and then 450 ml of room-temperature water was rapidly poured into the reaction system at one time under stirring, and the alkali concentration in the solution was reduced to 1 mol/L within 2 s, and the temperature was lowered to below 45°C.

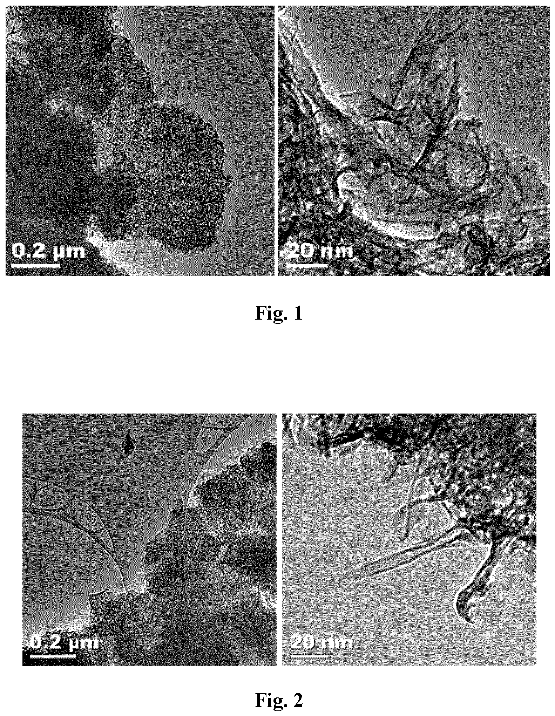

The solid flocculent material was separated from the alkaline solution, and washed and dried, then the sodium titanate nanofilm material was obtained. The thickness of its single nanofilm was 0.25 nm ~ 3 nm, and the average area of the nanofilm was greater than 1000 nm², and the as-prepared film showed the characteristics of an obvious two-dimensional material as shown in low magnification and high magnification TEM images in Fig. 1. Although the titanate nanofilms are agglomerated together, their structures do not contain any nanoporous structures or porous skeletal structures; according to the observation in the low-magnification photographs of Fig. 1, in combination with the electron-beam penetration of the TEM, it can be found that the thickness of the agglomerates is extremely thin, which suggests that the agglomerates are not structurally stable near-spherical bodies but rather flat aggregates of a large number of films, which were uniformly flattened out on the TEM carbon mesh during the TEM sample preparation process.

The solid flocculent material after separation from alkaline solution as described above was dispersed in water, and 0.025 mol/L HCl solution was gradually added to it under stirring state, so that the pH value of the mixed solution decreased continuously, and the pH value of the mixed solution was finally controlled between 2 ~ 5. After 10 min, it was separated, cleaned, and dried, which led to the product of the titanic acid nanofilms, with thicknesses of about 0.25 nm ~ 3 nm for a single thin film, and the average area of the single film was larger than 1000 nm²; its low magnification and high magnification TEM images is shown in Fig. 2.

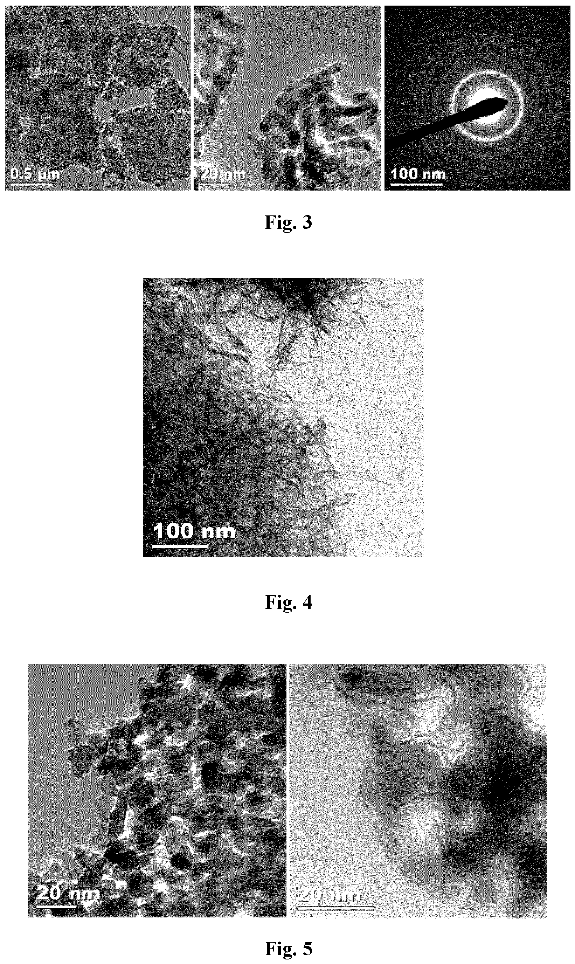

The above titanic acid nanofilm material was heat-treated at 475°Cfor 2 h, i.e., the anatase-type nano-TiO₂ sheet powder material was obtained, and the thickness of the sheet was about 0.5 nm ~ 7 nm, and the average area of the sheet was greater than 200 nm²; and its low magnification and high magnification TEM images, together with diffraction spectra were shown in Fig. 3;
Then the titanic acid nanofilm material was treated at 900°C for 2 h, i.e., the rutile nano-TiO₂ sheet powder material was obtained; The thickness of the as-prepared sheet was about 1 nm ~ 15 nm, and the average area of the as-prepared sheet was greater than 100 2 nm².

The the sodium titanate nanofilm material, the titanic acid nanofilm material, and the TiO₂ nanosheet powder can be applied to polymer-basedd nanocomposite materials, ceramic materials, photocatalytic materials, hydrophobic materials, sewage degradation materials, bactericidal coatings, anticorrosive coatings, marine coatings, and other fields.

### Example 2

The present example provides a method for preparing a sodium titanate nanofilm material, a titanic acid nanofilm material, and a TiO₂ nanosheet powder, comprising the following steps:
Weighing metallic Ti and Al raw materials in accordance with the ratio of Ti_{33.3}Al_{66.7} (atomic percentage), melting these raw materialsto obtain an alloy melt with a composition of Ti_{33.3}Al_{66.7}, solidifying the alloy melt into an alloy ingot, and then crushing to an initial alloy powder with a particle size of no more than 100 µm, which is mainly composed of TiAl₂ intermetallic compound.

Under ambient pressure, 0.5 g of the above-made initial alloy powder was added to 50 mL of an aqueous NaOH solution at a concentration of 10 mol/L and at a temperature of its boiling point temperature (about 119°C) with continue stirring.Ti_{33.3}Al_{66.7} initial alloy powder undergoes nano-fragmentation through intense hydrogenation and Al-removal reactions in concentrated alkaline solution, and simultaneously undergoes shape and compositional reconfiguration to generate solid flocculent products diffusely distributed in alkaline solution.

The hydrogenation and Al-removal reaction was completed within 30 s. After holding the temperature for 2 h to ensure the completion of the hydrogenation and Al-removal reaction, the corresponding products could still be obtained by prolonging the holding time; the volume of the solution was maintained at 50 ml by replenishing the evaporated water during the holding time.

After 2 h, the hot concentrated alkaline solution containing the solid flocculent product was poured onto a five-stacked copper mesh with pore sizes of 200 µm, 20 µm, 5 µm, 5 µm, 5 µm, respectively, at an angle of 45° to the horizontal plane; the solid flocculent product was retained on the five-stacked copper mesh, and the alkaline solution was filtered off, while the temperature of the solid flocculent product was reduced to less than 45°C in 20 s.

The solid flocculent material was washed and dried, i.e., a sodium titanate nanofilm material was obtained, with a thickness ranging from 0.25 nm ~ 3 nm for a single film, and an average area of the film being greater than 1000 nm².

The solid flocculent material after separation from the alkaline solution as described above was dispersed in water, and 0.025 mol/L HCl solution was gradually added to it under stirring, so that the pH value of the mixed solution decreased continuouslyand finally kept between 2 ~ 5 for 10 min. The titanic acid nanofilm was obtained after separation, washing and dring, and the thickness of the single nanofilm was about 0.25 nm ~ 3 nm, with the average area of larger than 1000 nm². The morphology shown in TEM images of Fig. 4 indicates that the target products of titanic acid nanofilms can still be obtained by continuing the holding time for 2 h after the end of the hydrogen evolution and Al-removal reaction, combined with the subsequent acid solution reaction.

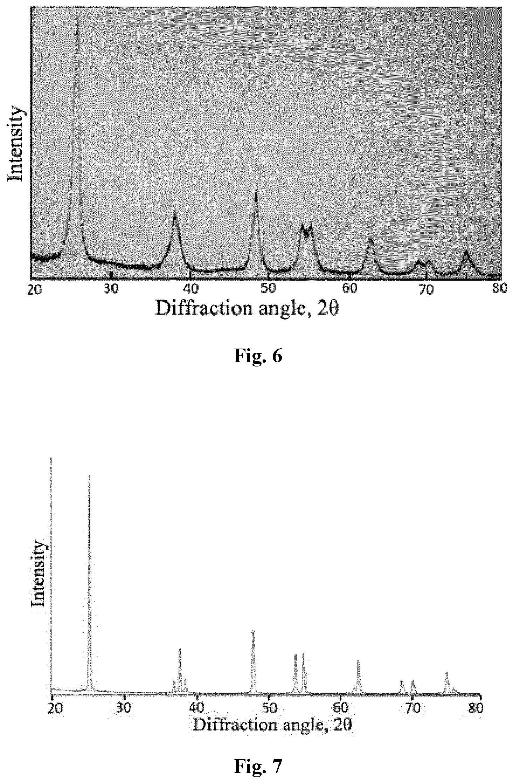

The above titanic acid nanofilm material was heat-treated at 550°C for 2 h, i.e., the anatase-type nano TiO₂ sheet powder material was obtained, with the thickness of about 0.5 nm ~ 10 nm, and the average area of more than 200 nm² as shown in the low-magnification and high-magnification TEM images of Fig. 5, with its XRD spectrum as shown in Fig. 6.

The titanic acid nanofilm material was treated at 700°C for 1 h to obtain a powder material of anatase-type TiO₂ nanosheets mixed with rutile-type TiO₂ nanosheets, with the thickness of the flakes of about 1 nm ~ 12 nm, and the average area of the flakes of greater than 150 nm².

The above titanic acid nanofilm material was treated at 900°C for 2h to obtain a powder material of rutile-type TiO₂ nanosheets, the thickness of which was about 1 nm ~ 15 nm, and the average area s was greater than 100 nm².

### Example 3

The present example provides a potassium titanate nanofilm material and a method for preparing the titanic acid nanofilm material, comprising the following steps:
Weighing the metallic Ti and Al raw materials in accordance with the ratio of Ti₄₀Al₆₀ (atomic percentage), melting to obtain an alloy melt with the composition of Ti₄₀Al₆₀; Then an initial alloy strip with a thickness of ~1 mm was prepared form the alloy melt by a rapid solidification method through melt spinning with a copper roller. The initial alloy strip mainly consists of TiAl₂ intermetallic compounds and TiAl intermetallic compounds.

Under ambient pressure, 0.25 g of the above-made Ti₄₀Al₆₀ initial alloy strip was added into 50 ml of aqueous KOH solution at a concentration of 15 mol/L and a temperature of its boiling point (~150°C) with continue stirring. The Ti₄₀Al₆₀ initial alloy strip undergoes nano-fragmentation during the reaction with concentrated alkaline solution through intense hydrogenation and Al-removal reactions, and simultaneously undergoes shape and compositional reconfiguration to generate solid flocculent products diffusely distributed in the alkaline solution.

The hydrogenation and Al-removal reaction was completed within 4 min, and the reaction was kept warm for another 1 min to ensure the completion of the reaction, and then 700 ml of water at room temperature was rapidly poured into the reaction system under stirring, and the concentration of alkali in the solution was reduced to less than 1 mol/L within 2 s, and the temperature was reduced to less than 45°C.

The solid flocculent material was separated from the alkaline solution and washed and dried, i.e., the potassium titanate nanofilm material was obtained, with the thickness of a single film ranging from 0.25 nm ~ 3 nm, and the average area of the film being greater than 1,000 nm², and the resulting film exhibited the characteristics of an obvious two-dimensional material.

The solid flocculent material after separation from the alkaline solution as described above was dispersed in water, and 0.025 mol/L HCl solution was gradually added to it under stirring, so that the pH value of the mixed solution was continuously decreased, and finally kept between 2 ~ 5 for 10 min. The titanic acid nanofilm was obtained after separation, washing and dring, and the thickness of a single thin film was about 0.25 nm ~ 3 nm, and the average area of the single film was greater than 1000 nm².

### Example 4

The present example provides a method of preparing sodium titanate nanotubes, titanic acid nanotubes, and TiO₂ nanotubes/rods, comprising the following steps:
Weighing the metallic Ti and Al raw materials in accordance with the ratio of Ti_{33.3}Al_{66.7} (atomic percentage), melting to obtain an alloy melt with the composition of Ti_{33.3}Al_{66.7}; Then an initial alloy ribbon with a thickness of ~30 µm was prepared form the alloy melt by a rapid solidification method through melt spinning with a copper roller. The initial alloy ribbon mainly consists of TiAl₂ intermetallic compound.

Under ambient pressure, 0.5 g of the Ti_{33.3}Al_{66.7} initial alloy ribbon was added into 50 mL of aqueous NaOH solution at a concentration of 10 mol/L and a temperature of its boiling point (~119°C) with continue stirring. The Ti_{33.3}Al_{66.7} initial alloy ribbon undergoes nano-fragmentation through intense hydrogenation and Al-removal reaction in concentrated alkaline solution, and simultaneously undergoes shape and compositional reconfiguration to generate solid flocculent products diffusely distributed in alkaline solution.

The hydrogenation and Al-removal reaction was completed within 15 s, and then the hot aqueous NaOH solution containing the solid flocculent material as described above was sealed in a reaction vessel lined with polytetrafluoroethylene, and then the temperature of the sealed reaction vessel and the solid flocculent product with the aqueous NaOH solution inside the vessel was raised to 250°C within 10 min, and then kept warm for 20 min; at this time, the pressure inside the vessel was higher than the ambient pressure;

After 20 min, the reactor is placed in cold water to cool rapidly. After the reaction vessel cools down to room temperature, the pressure inside the vessel is restored to ambient pressure, and then the solid material inside the reaction vessel is separated from the solution, cleaned and dried, i.e., sodium titanate nanotubes are obtained, and the outer diameter of the tubes is 3 nm ~ 12 nm, and the length of the tubes is more than 5 times of the outer diameter of the tubes.

The solid substance in the reactor after separation from the alkaline solution was dispersed in water, and then 0.025 mol/L HCl solution was gradually added to it, so that the pH value of the mixed solution continuously decreased, and the pH value of the mixed solution was finally controlled between 2 ~ 4. After 10 min, solid-liquid separation, cleaning, and drying were carried out, i.e., titanic acid nanotubes were obtained; and the outer diameter of the tubes was in the range of 3 nm ~ 12 nm, the length of the tube is more than 5 times of the outer diameter of the tube.

The titanic acid nanotubes obtained above are heat-treated at 550°C for 2 h, i.e., anatase TiO₂ nanotubes are obtained, and the outer diameter of the tubes ranges from 3nm ~ 15nm, and the length of the tubes is more than 5 times of the outer diameter of the tubes.

The above-produced titanic acid nanotubes are heat-treated at 900°C for 2 h, i.e., rutile-type TiO₂ nanotubes/rods are obtained, and the outer diameter of the tubes/rods is 4 nm ~ 20 nm, and the length of the tubes/rods is more than 3 times of the outer diameter of the tubes/rods.

### Example 5

The present example provides a method of preparing a potassium titanate nanofilm material, a titanic acid nanofilm material, and a TiO₂ sheet powder, comprising the following steps:
Weighing metallic Ti and Zn raw materials in accordance with the ratio of Ti₂₅Zn₇₅ (atomic percentage), melting to obtain an alloy melt with a composition of Ti₂₅Zn₇₅; Then an initial alloy ribbon with a thickness of ~30 µm was prepared form the alloy melt by a rapid solidification method through melt spinning with a copper roller. The initial alloy ribbon mainly consists of TiZn₃ intermetallic compound.

Under ambient pressure, 0.25 g of the above-made Ti₂₅Zn₇₅ initial alloy ribbon was added into 50 ml of a KOH aqueous solution at a concentration of 15 mol/L and a temperature of 105°C ~ 115°C with continue stirring.The Ti₂₅Zn₇₅ initial alloy ribbon undergoes nano-fragmentation during the reaction with concentrated alkaline solution through intense hydrogenation and Zn-removal reaction and simultaneously undergoes shape and compositional reconfiguration to generate solid flocculent products diffusely distributed in the alkaline solution.

The hydrogenation and Zn-removal reaction was finished within 15 s, and the reaction temperature was hold for 2 min to ensure the complete completion of the reaction, and then 700 ml of room temperature water was rapidly poured into the reaction system at one time under stirring, and the alkali concentration in the solution was lowered to less than 1 mol/L within 2 s, and the temperature was lowered to less than 45°C.

The above solid flocculent material was separated from the alkaline solution, and washed and dried, i.e., the potassium titanate nanofilm material was obtained,with the thickness of a single film ranging from 0.25 nm ~ 3 nm, and the average area of the film being greater than 1,000 nm².

The solid flocculent material after separation from the alkaline solution as described above is dispersed in water, and then 0.025 mol/L HCl solution is gradually added to it in a stirring state, so that the pH value of the mixed solution continuously decreased, and the pH value of the mixed solution was finally controlled between 2 ~ 5. After 10 min, it was separated, cleaned, and dried, which led to the product of the titanic acid nanofilms, and the thickness of a single thin film thereof is about 0.25 nm ~ 3 nm, and the average area of the single film is greater than 1000 nm².

The above titanic acid nanofilm material was heat treated at 500°C for 2 h, i.e., the anatase-type nano-TiO₂ sheet powder material was obtained, with a thickness of about 0.5 nm ~ 7 nm, and an average area of greater than 200 nm²;

The the titanic acid nanofilm material was treated at at 900°C for 2 h, i.e., the rutile nano-TiO₂ sheet powder material was obtained, with a thickness of about 1 nm to 15 nm, and an average area of greater than 100 nm².

### Example 6

The present example provides a method of preparing a sodium (lithium) titanate nanofilm material, a titanic acid nanofilm material, and a TiO₂ flake powder, comprising the following steps:
Weighing metallic Ti and Al raw materials in accordance with the ratio of Ti₂₅Al₇₅ (atomic percentage), melting to obtain an alloy melt with a composition of Ti₂₅Al₇₅; Then an initial alloy ribbon with a thickness of ~200 µm was prepared form the alloy melt by a rapid solidification method through melt spinning with a copper roller. The initial alloy ribbon mainly consists of TiAl₃ intermetallic compound.

A 6 mol/L LiOH solution, and a 14 mol/L NaOH solution were prepared separately, and the two solutions were mixed to obtain a mixed LiOH and NaOH solution with an OH⁻ concentration of 10 mol/L.

Under ambient pressure, 0.5 g of the above-made Ti₂₅Al₇₅ initial alloy ribbon was added to 50 mL of the above mixed solution at a temperature of its boiling point temperature with continue stirring.The Ti₂₅Al₇₅ initial alloy ribbon undergoes nano-fragmentation during reaction with concentrated alkaline solution through intense hydrogenation and Al-removalreactions, and simultaneously undergoes shape and compositional reconfiguration to generate solid flocculated products diffusely distributed in the alkaline solution.

The hydrogenation and Al-removal reaction was finished within 2 min, and the reaction temperature was hold for 2 min to ensure the complete completion of the reaction, and then 450 ml of room temperature water was rapidly poured into the reaction system under stirring, and the alkali concentration in the solution was lowered to 1 mol/L within 2 s, and the temperature was lowered to less than 45°C.

The above solid flocculent material was separated from the alkaline solution, washed and dried, i.e., the sodium (lithium) titanate nanofilm material was obtained, with a thickness of a single film of 0.25 nm ~ 3 nm and an average area of the film of more than 1000 nm².

The solid flocculent material after separation from the alkaline solution as described above was dispersed in water, and 0.025 mol/L HCl solution was gradually added to it under stirring, so as to continuously decrease the pH value of the mixed solution and ultimately control the pH value of the mixed solution between 2 - 5 for 10 min, and then separated, cleaned, and dried, which means that the titanic acid nanofilm was obtained, and the thickness of a single thin film thereof was about 0.25 nm ~ 3 nm, and the average area of the single film is greater than 1000 nm².
the above titanic acid nanofilm material was heat treated at 500°C for 2 h, i.e., the anatase-type nano-TiO₂ sheet powder material was obtained, and the thickness of which is about 0.5 nm ~ 7 nm, and the average area of which is greater than 200 nm²;

The the titanic acid nanofilm material was treated at at 900°C for 2 h, i.e., the rutile nano-TiO₂ sheet powder material was obtained, and the thickness of which is about 1 nm to 15 nm, and the average area of which is greater than 100 nm².

### Example 7

The present example provides a method of preparing sodium titanate nanotubes, titanic acid nanotubes, and TiO₂ nanotubes/rods, comprising the following steps:
Weighing the metallic Ti and Al raw materials in accordance with the ratio of Ti₂₉Al₇₁ (atomic percent), melting to obtain an alloy melt with a composition of Ti₂₉Al₇₁; Then an initial alloy ribbon with a thickness of ~25 µm was prepared form the alloy melt by a rapid solidification method through melt spinning with a copper roller. The initial alloy ribbon mainly consists of TiAl₂ and TiAl₃ intermetallic compounds.

Under atmospheric conditions, 0.5 g of the above initial alloy ribbon was added into 50 mL of aqueous NaOH solution at a concentration of 15 mol/L and a temperature of 105°C ~ 115°C with coninue stirring. The Ti₂₉Al₇₁ initial alloy ribbon undergoes nano-fragmentation during the reaction with concentrated alkaline solution through intense hydrogenation and Al-removal reactions, and undergoes simultaneous shape and compositional reconfiguration to generate solid flocculent products that are diffusely distributed in alkaline solution.

The hydrogenation and Al-removal reaction was finished within 15 s, and then the above NaOH aqueous solution containing solid flocculent material was sealed in a reactor lined with PTFE, and then the temperature of the sealed reactor and the solid flocculent product and the NaOH aqueous solution inside the sealed reactor was increased to 275°C within 10 min, and then kept warm for 10 min; at this time, the pressure inside the reactor was higher than the ambient pressure;

After holding the temperature for 10min, the reaction vessel is placed in cold water to rapidly cooly. After the reaction vessel is cooled down to room temperature, the pressure inside the vessel is restored to ambient pressure, and then the solid material inside the reaction vessel is separated from the solution, cleaned, and dried, then sodium titanate nanotubes are obtained, with an outer diameter of 3 nm ~ 12 nm, and a length ofmore than 5 times of the outer diameter of the tubes.

The solid substance in the reactor after separation from the alkaline solution is dispersed in water, and then 0.025 mol/L HCl solution is gradually added to it, so that the pH value of the mixed solution continuously decreased, and finally the pH value of the mixed solution is controlled between 2 ~ 5. After 5 min, solid-liquid separation, cleaning and drying are performed, i.e., titanic acidnanotubes are obtained; The outer diameter of the tube ranges from 3 nm ~ 12 nm, and the length of the tube is more than 5 times of the outer diameter of the tube.

The titanic acid nanotubes obtained above are heat-treated at 500°C for 3 h, i.e., anatase TiO₂ nanotubes are obtained, and the outer diameter of the tubes is in the range of 3 nm ~ 15 nm, and the length of the tubes is more than 5 times of the outer diameter of the tubes.

The titanic acid nanotubes produced above are heat-treated at 900°C for 2 h, i.e., rutile TiO₂ nanotubes/rods are obtained; The outer diameter of the tubes/rods is 4 nm ~ 20 nm, and the length of the tubes/rods is more than 3 times of the outer diameter of the tubes/rods.

### Example 8

The present example provides a method of preparing sodium titanate nanotubes, titanic acid nanotubes, and TiO₂ nanotubes/rods, comprising the following steps:
Weighing the metallic Ti and Al raw materials in accordance with the ratio of Ti₂₅Al₇₅ (atomic percentage), melting to obtain an alloy melt with a composition of Ti₂₅Al₇₅;Then an initial alloy ribbon with a thickness of ~25 µm was prepared form the alloy melt by a rapid solidification method through melt spinning with a copper roller. The initial alloy ribbon mainly consists ofTiAl3 intermetallic compound.

Under normal temperature and pressure, 0.5 g of the above-made initial alloy ribbon and 50 mL of NaOH aqueous solution with a concentration of 10 mol/L were placed in a sealed reactor lined with PTFE; then the temperature of the sealed reactor and the initial alloy and the NaOH aqueous solution inside the sealed reactor were raised to 250°C within 10min, and then held for 20 min; at this time, the pressure inside the reactor was higher than the ambient pressure.

After 20 min, the reactor is placed in cold water to rapidly cool down. After the reaction vessel cools down to room temperature, the pressure in the vessel is restored to ambient pressure, and then the solid material in the reaction vessel is separated from the solution, cleaned and dried, then sodium titanate nanotubes are obtained, with an outer diameter of 3 nm ~ 12 nm, and a length of more than 5 times of the outer diameter of the tubes.

The titanate nanotubes obtained above were heat-treated at 550°C for 1 h, i.e., anatase TiO₂ nanotubes were obtained, and the outer diameter of the tubes was 3 nm ~ 15 nm, and the length of the tubes was more than 5 times of the outer diameter of the tubes.

The above-made titanate nanotubes are heat-treated at 900°C for 2 h, i.e., rutile-type TiO₂ nanotubes/rods are obtained, and the outer diameter of the tubes/rods is 4 nm ~ 20 nm, and the length of the tubes/rods is more than 3 times of the outer diameter of the tubes/rods.

### Example 9

The present example provides a method of preparing a sodium titanate nanofilm material, a titanic acid nanofilm material, and a TiO₂ sheet powder, comprising the following steps:
Weighing metallic Ti and Zn raw materials in accordance with the ratio of Ti₂₅Zn₇₅ (atomic percentage), melting to obtain an alloy melt with the composition of Ti₂₅Zn₇₅;Then a Ti₂₅Zn₇₅ initial alloy ribbon with a thickness of ~100 µm was prepared form the alloy melt by a rapid solidification method through melt spinning with a copper roller. The initial alloy ribbon mainly consists of TiZn₃ intermetallic compound.

Under ambient pressure, 0.5 g of the above-made initial alloy ribbon was added into 50 mL of aqueous NaOH solution at a concentration of 10 mol/L and a temperature of its boiling point (~119°C) with continue stirring. The Ti₂₅Zn₇₅ initial alloy ribbon undergoes nano-fragmentation during the reaction with concentrated alkaline solution through intense hydrogenation and Zn-removal reaction and simultaneously undergoes shape and compositional reconfiguration to generate solid flocculent products diffusely distributed in the alkaline solution.

The intense hydrogenation and Zn-removal reaction was completed within 1 min, and the reaction temperature was hold for 2 min to ensure the complete completion of the reaction, and then 450 ml of room-temperature water was rapidly poured into the reaction system at one time under stirring, and the alkali concentration in the solution was lowered to 1 mol/L within 2 s, and the temperature was lowered to less than 45°C.

The solid flocculent material was separated from the alkaline solution and washed and dried, i.e., the sodium titanate nanofilm material was obtained, with the thickness of a single film ranging from 0.25 nm ~ 3 nm, and the average area of the film being greater than 1,000 nm², and the resulting film exhibited the characteristics of an obvious two-dimensional material.

The solid flocculent material after separation from the alkaline solution as described above was dispersed in water, and 0.025 mol/L HCl solution was gradually added to it in the stirring state, so that the pH value of the mixed solution was continuously decreased, and the pH value of the mixed solution was finally controlled between 2 ~ 5. After 10 min, it was separated, cleaned, and dried, then the product of the titanic acid nanofilm was obtained, with a thickness of a single thin film about 0.25 nm ~ 3 nm, and an average area of the single film greater than 1000 nm².

The above titanic acid nanofilm material was heat treated at 500°C for 2 h, i.e., the anatase-type nano-TiO₂ sheet powder material was obtained, with a thickness of about 0.5 nm ~ 7 nm, and an average area ofgreater than 200 nm²;
Theabove titanic acid nanofilm material was treated at at 900°C for 2 h, i.e., the rutile nano-TiO₂ sheet powder material was obtained, with a thickness of about 1 nm to 15 nm, and an average area ofgreater than 100 nm².

### Example 10

The present example provides a preparation method of a titanate nanofilm powder material, and the titanic acid nanofilm powder material, comprising the following steps:
Weighing the metallic Ti and Al raw materials in accordance with the ratio of Ti₂₅Al₇₅ (atomic percentage), melting to obtain an alloy melt with the composition of Ti₂₅Al₇₅; Then an initial alloy ribbon with a thickness of ~100 µm was prepared form the alloy melt by a rapid solidification method through melt spinning with a copper roller. The initial alloy ribbon mainly consists of TiAl₃ intermetallic compound.

Under ambient pressure, 0.5 g of the above prepared Ti₂₅Al₇₅ initial alloy ribbon was placed in a closed container with 50 ml of NaOH aqueous solution at a concentration of 10 mol/L. At the beginning, the initial alloy strip was not in contact with the alkaline solution;
The temperature inside the closed container, as well as the temperature of the initial alloy ribbon and the alkaline solution was raised to 150°C, at which time the closed container was in a high-pressure state, and then the Ti₂₅Al₇₅ initial alloy ribbon inside the closed container was mixed with the alkaline solution at this temperature, so that a violent hydrogen generation and T-removal reaction took place, and the Ti₂₅Al₇₅ initial alloy ribbon undergoes nano-fragmentation through intense hydrogen generation and T-removal reactionduring the high temperature and high pressure process and simultaneously undergoes shape and compositional reconfiguration to produce a solid flocculent product.

The hydrogen generation and T-removal reaction was completed within 30 s. After 30 s, the closed vessel and the reaction system were rapidly cooled down to near room temperature in cooling water, and the pressure in the closed vessel was restored to ambient pressure;
After the temperature of the reaction system was reduced to ambient temperature and pressure, the solid flocculent product was separated from the alkaline solution, and washed and dried, i.e., the sodium titanate nanofilm powder material with a thickness of 0.25 nm - 5 nmand an average area of greater than 1000 nm² was obtained, and thesingle sodium titanate nanofilmshows the characteristics of an obvious two-dimensional material;
The solid flocculent product after separation from the alkaline solution as described above was dispersed in water, and then 0.025 mol/L HCl solution was gradually added to it, so that the pH value of the mixed solution continuously decreased, and the pH value of the mixed solution was finally controlled between 3 ~ 5. After separation, cleaning and drying, the titanic acid nanofilm powder material is obtained, and the thickness of a single film is about 0.25 nm ~ 5 nm, and the average area of the film is greater than 1000 nm².

### Comparative Example 1

Under ambient pressure, 0.5 g of anatase TiO₂ powder with particle size of 50 nm ~ 100 nm was added into 50 mL of NaOH aqueous solution with a concentration of 10 mol/L and a temperature of its boiling point temperature (119°C) with continue stirring.

After 10 min, 450 mL of room temperature water was rapidly poured into the reaction system under stirring, and the alkali concentration in the solution was reduced to 1 mol/L, and the temperature was reduced to below 40°C.

The solid material in the solution was separated from the solution, cleaned and dried, and the XRD spectrum of its product was measured, as shown in Fig. 7.

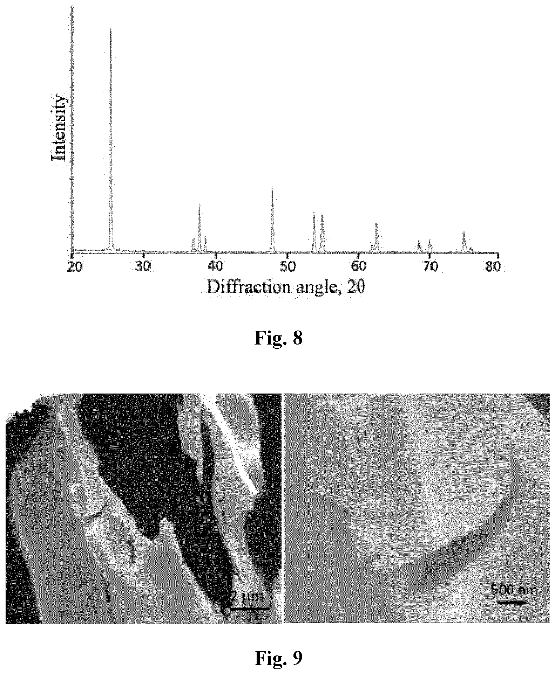

Combined with the XRD spectrum of the anatase TiO₂ powder before this reaction in Fig. 8, the analysis shows that after 10 min of the reaction, the reactants have hardly changed. The width of the XRD peaks indicates that the size of the TiO₂ particles has not changed significantly. This comparative example shows that when the Ti source is TiOz powder, it is difficult to break the Ti-O bond in a short time at the boiling temperature of the alkaline solution in the ambient environment.

### Comparative Example 2

The raw materials of metallic Ti and Al were weighed according to the ratio of Ti₂₅Al₇₅ (atomic percentage), and the alloy melt with the composition of Ti₂₅Al₇₅ was obtained by melting; solidifying the alloy melt into an alloy ingot, and then crushing to an initial alloy powder with a particle size of no more than 30 µm, which is mainly composed of TiAl₃ intermetallic compound.

Under ambient pressure, the above initial alloy powder was reacted with 10 mol/L NaOH solution at a temperature of 35°C for 2 h, and the resulting product is shown in Fig. 9. It can be seen that under the reaction conditions, the shape of the original initial alloy powder before and after the reaction was roughly unchanged, and it was still the original crushed and angular powder particles, such as the angular morphology shown in Fig. 9, and its microstructure did not generate a large number of monolithic two-dimensional thin film products, but rather, it was the nanoporous network composed of the original angular powder particles. Therefore, the reaction equilibrium of the initial alloy and the alkaline solution occurring at a lower temperature is completely different from the reaction equilibrium of the present invention occurring near the boiling point temperature, and the product morphology is also completely different.

The technical features of the above examples may be combined arbitrarily. For clarity of descriptions, all of the possible combinations of the technical features of the above examples are not described. However, as long as the combinations of these technical features are not contradictory, they should be considered as within the scope of protection of the present disclosure.

The above examples are merely several implementations of the present disclosure. Although the descriptions of the examples are relatively specific, they cannot be understood as limiting of the scope of protection present disclosure. It should be pointed out that several variations and improvements made by persons of ordinary skills in the art without departing from the idea of the present disclosure shall all fall within the scope of protection of the present disclosure. Therefore, the scope of protection of the present disclosure shall be indicated by the appended claims.

## Claims

1. A method of preparing a titanate nanofilm material, comprising the following steps:
step 1, providing an initial alloy comprising a T element and a Ti element, wherein the T element comprises at least one of Al and Zn, and the phase composition of the initial alloy comprises a T-Ti intermetallic compound;
step 2, reacting the initial alloy with an alkali solution at a temperature of *T₁*, during which the reaction interface advances inwardly from the surface of the initial alloy at an average rate of greater than 20 µm/min, and the initial alloy at the reaction interface undergoes nano-fragmentation through hydrogen generation and T-removal reaction, and simultaneously undergoes shape and compositional reconfiguration to generate solid flocculent products; where 100°C <*T₁*;
step 3, the temperature of the solid flocculated product in the reaction system described in step 2 is lowered from *T₁* and the solid flocculated product is collected, i.e., the titanate nanofilm material is obtained.

2. A method of preparing a titanic acid nanofilm material, wherein the titanic acid nanofilm material is obtained by reacting the product prepared according to claim 1 or the titanate nanofilm material according to claim 1 with an acid solution, and then collecting the solid product.

3. A method of preparing a TiOz nanosheet powder, wherein the TiOz nanosheet powder is prepared by heat treating the product prepared according to claim 2 or the titanic acid nanofilm material according to claim 2.

4. A method of preparing titanate nanotubes, wherein thetitanate nanotubes are prepared by the following steps:
the solid substance containing the product or titanate nanofilm of claim 1 or (and) the product or titanic acid nanofilm of claim 2 is sealed in a closed container with an alkaline solution, and subsequently subjected to a high temperature and high pressure treatment at a temperature *T₂* higher than that of the *T_{f solution}*; wherein the *T_{f solution}* is the boiling temperature of the alkali solution involved in the reaction at ambient pressure, and 100°C <*T₁* ≤ *T_{f solution}*<*T₂*; and after a certain time of reaction, the closed container is cooled and the pressure is restored to ambient pressure, and the final solid product is collected, i.e., titanate nanotubes are obtained.

5. A method of preparing titanic acid nanotubes, wherein the titanic acid nanotubes are obtained by reacting the product prepared according to claim 4 or the titanate nanotubes according to claim 4 with an acid solution and collecting the solid product.

6. A method of preparing TiO₂ nanotubes or rods, wherein the TiO₂ nanotubes or rods are prepared by heat treating the product prepared according to claim 5 or the titanic acid nanotubes according to claim 5.

7. A method of preparing titanate nanotubes, comprising the following steps:
step 1), providing an initial alloy comprising a T element and a Ti element, wherein the T element comprises at least one of Al, Zn, and the phase composition of the initial alloy comprises a T-Ti intermetallic compound;
step 2), sealing the initial alloy with an alkali solution in a closed container, and subsequently heating the temperature of the closed reaction system to *T₂* and holding it for a period of time; wherein 100°C <*T_{f solution}*<*T₂*; *T_{f solution}* is the boiling point temperature of the alkali solution involved in the reaction at ambient pressure, and the pressure in the closed container at the *T₂* temperature is higher than ambient pressure;
step 3), cooling the closed container and restoring the pressure to ambient pressure, and collect the solid product, i.e., obtain the titanate nanotube material.

8. A method of preparing titanic acid nanotubes, wherein the titanic acid nanotubes are obtained by reacting the product prepared according to claim 7 or the titanate nanotubes according to claim 7 with an acid solution and collecting the solid product.

9. A method of preparing TiOz nanotubes, wherein the TiOz nanotubes are prepared by heat treating the product prepared according to claim 8 or the titanic acid nanotubes according to claim 8.

10. An application of the product material prepared by the preparation method according to any one of claims 1-9 in polymer-based nanocomposites, ceramic materials, photocatalytic materials, hydrolysis for hydrogen production, hydrophobic materials, sewage degradation materials, bactericidal coatings, anticorrosive coatings, and marine coatings.
